# EUROPEAN PATENT APPLICATION

(11) **EP 4 826 443 A1**
(43) Date of publication of application: **21.10.2026**
(21) Application number: 24901920.9
(22) Date of filing: 21.02.2024
(51) Int. Cl.: G02F 1/13, C03B 23/03

(54) **MANUFACTURING DEVICE FOR CURVED-SURFACE DIMMING FILM**

(30) Priority: 12.12.2023 WO PCT/CN2023/138058; 07.02.2024 WO PCT/CN2024/076628
(71) Applicant: Zhejiang Jingyi New Material Technology Co. Ltd, Taizhou, Zhejiang 318020 (CN)
(72) Inventor: LI, Yanan, Dorval Quebec H9P 1K2 (CA); LIANG, Bin, Taizhou, Zhejiang 318020 (CN); ZHANG, Dawei, Taizhou, Zhejiang 318020 (CN); ZHANG, Yuzhe, Taizhou, Zhejiang 318020 (CN); ZHAO, Shiyong, Dorval Quebec H9P 1K2 (CA); XIAO, Shuyong, Dorval Quebec H9P 1K2 (CA)
(74) Representative: Epping - Hermann - Fischer
(86) International application number: PCT/CN2024/077869
(87) International publication number: WO 2025/123487

(57) **Abstract**

A manufacturing device for a curved dimming film. By means of a feeding unit, a pulse heat-shock unit, a heat transfer unit, and a hot-press forming unit, on the basis of corresponding process parameters, pulse heat-shock and hot-press forming are performed on a flat dimming film to manufacture a curved dimming film having a preset size and shape, i.e., a preset curved function θ; and then, the curved dimming film and curved glass corresponding thereto are prepared into curved dimming glass. The problem in the prior art that curved dimming glass prepared by a flat dimming film has a wrinkled appearance is solved. The present device is simple and easy to control, and has good application prospects.

## Description

### CROSS REFERENCE OF RELATED APPLICATION

This application claims priority to International Patent Application No. PCT/CN2023/138058, titled "CURVED-SURFACE DIMMING FILM, CURVED-SURFACE DIMMING GLASS AND PREPARATION THEREFOR", filed on December 12, 2023 with the China National Intellectual Property Administration, and International Patent Application No. PCT/CN2024/076628, titled "CURVED DIMMING FILM, CURVED DIMMING GLASS AND PREPARATION THEREOF", filed on February 7, 2024 with the China National Intellectual Property Administration, which are incorporated herein by reference in their entireties.

### FIELD

The present disclosure relates to a manufacturing device for curved dimming film, and more specifically, to a manufacturing device for curved dimming film comprising a pulse thermal shock unit and a hot-press forming unit.

### BACKGROUND

Dimming glass is a light control device, mainly consisting of a dimming film laminated between two layers of transparent glass. The types of the dimming film include suspended particle device (SPD) film, polymer dispersed liquid crystal (PDLC) film, electrochromic (EC) film, thermochromic (TC) film, photochromic (PC) film and so on. For suspended particle device film, polymer dispersed liquid crystal film, and electrochromic film, when power is applied, the arrangement or state of materials in the dimming films changes, thereby altering light transmittance characteristics of the dimming films, such as switching from a low transmittance state to a high transmittance state, or from a high transmittance state to a low transmittance state. Such dimming films, which can achieve rapid switching between an on-state and an off-state under the action of an electric field/current, have advantages of actively regulating light transmittance and saving energy, and can be applied in smart windows for spacecraft, high-speed trains, automobiles, buildings, and the like, as well as rearview mirrors, sunglasses, displays, and the like.

With the rapid development of panoramic sunroofs in new energy vehicles and glass curtain walls in buildings, users demand for diversified glass used in automotive panoramic sunroofs and building curtain walls are increasing, particularly with respect to various complex multi-curved glass. However, manufacturing complex curved glass into dimming glass has become a bottleneck restricting the application of such glass. This process is completely different from planar dimming glass. During the processing and forming of curved dimming glass, in a case that the planar dimming film is used, as the curvature of the curved surface increases or multi-curved surfaces are required, the dimming film in the laminated curved dimming glass is generally prone to wrinkling, which seriously affects the appearance of the dimming glass and ultimately results in a low product yield.

It can be seen that in the prior art, when the planar dimming film is used to manufacture curved dimming glass, there is a problem that the dimming film in the curved dimming glass after lamination using a planar dimming film is prone to wrinkling. Therefore, it is necessary to provide a device capable of manufacturing curved dimming film from the planar dimming film, so as to solve the problem by preparing a curved dimming glass using the curved dimming film and corresponding curved glass.

### SUMMARY

In order to solve the above technical problem, a manufacturing device for producing curved dimming film is provided by the present disclosure.

A manufacturing device for curved dimming film, comprising:
a feeding unit, configured to provide a planar dimming film;
a pulse thermal shock unit, configured to perform a pulse thermal shock on the planar dimming film;
a thermal transfer unit, configured to transfer the planar dimming film processed by the pulse thermal shock unit under thermal insulation; and
a hot-press forming unit, configured to perform hot-press forming on the planar dimming film from the thermal transfer unit to form the curved dimming film.

Optionally, the pulse thermal shock unit comprises an upper heating module and a lower heating module, the upper heating module is for heating an upper surface of the planar dimming film from the feeding unit, and the lower heating module is for heating a lower surface of the planar dimming film from the feeding unit.

Optionally, the heating temperature of the upper heating module and the lower heating module are independently controllable.

Optionally, the pulse thermal shock unit further includes a sample holder arranged between the upper heating module and the lower heating module, the sample holder is for placing the planar dimming film from the feeding unit, a distance between the sample holder and the upper heating module is in a range of 2cm to 10cm, and a distance between the sample holder and the lower heating module is in a range of 2cm to 10cm.

Optionally, the hot-press forming unit includes an upper forming mold and a lower forming mold, the upper forming mold and the lower forming mold are matched in size and shape, the upper forming mold is for hot-press forming the upper surface of the planar dimming film from the thermal transfer unit, and the lower forming mold is for hot-press forming the lower surface of the planar dimming film from the thermal transfer unit.

Optionally, the heating temperature of the upper forming mold and the lower forming mold are independently controllable.

Optionally, the upper forming mold and the lower forming mold each has a curved-surface function ⊖ ranging from 0mm/m to 300mm/m.

Optionally, the upper forming mold and the lower forming mold each has the curved-surface function ⊖ further ranging from 35mm/m to 250mm/m.

Optionally, a cross-sectional contour of a cross-sectional line of each of the upper forming mold and the lower forming mold includes at least one of a circular arc, an elliptical arc, a parabolic curve and an asymmetric curve.

Optionally, in a section of a cross-sectional line at the same stacked position, a ratio of curvature R of the upper forming mold to the lower forming mold ranges from 0.9 to 1.1.

Optionally, an opposing surface of the upper forming mold and/or the lower forming mold has an uneven structure.

Optionally, the lower forming mold has dense vacuum extraction channels with a pore diameter of 2 mm or less.

Optionally, the lower forming mold is connected to a first vacuum extraction system, and the first vacuum extraction system is configured to perform vacuum extraction through the vacuum extraction channels in the lower forming mold.

Optionally, the manufacturing device further includes a first pressing drive device, where the first pressing drive device is connected to the upper forming mold and is configured to drive the upper forming mold to press on the lower forming mold to perform hot-press forming on the planar dimming film from the thermal transfer unit, and the lower forming mold is fixedly arranged.

Optionally, the pulse thermal shock unit includes an upper heating module and a lower heating module, the upper heating module is for heating an upper surface of the planar dimming film from the feeding unit, and the lower heating module is for heating a lower surface of the planar dimming film from the feeding unit;
the lower forming mold is densely distributed with vacuum extraction channels with a pore size of 2mm or less; the lower forming mold is connected to a first vacuum extraction system, and the first vacuum extraction system is configured to perform vacuum extraction through the vacuum extraction channels in the lower forming mold;
the manufacturing device further includes a first pressing drive device, the first pressing drive device is connected to the upper forming mold and is configured to drive the upper forming mold to press on the lower forming mold to perform hot-press forming on the planar dimming film from the thermal transfer unit, and the lower forming mold is fixedly arranged;
during operation:
   in the pulse thermal shock unit, the upper heating module is set at a temperature ranging from 120°C to 280°C, the lower heating module is set at a temperature ranging from 130°C to 290°C, the temperature of the lower heating module is set to be 10°C to 15°C higher than that of the upper heating module, and a heating duration of each of the upper heating module and the lower heating module is set to 3s to 60s;
   the thermal transfer unit is set at a temperature ranging from 70°C to 130°C, and the thermal transfer unit is set to transfer the planar dimming film processed by the pulse thermal shock unit to the hot-press forming unit within 2s to 50s;
   in the hot-press forming unit, the upper forming mold is set at a temperature ranging from 50°C to 180°C, the lower forming mold is set at a temperature ranging from 55°C to 185°C, the temperature of the lower forming mold is set to be 5°C to 10°C higher than that of the upper forming mold, and the upper forming mold and the lower forming mold are set to perform hot-press forming treatment on the planar dimming film from the thermal transfer unit for 5s to 90s;
   the temperature of the upper heating module is set to be at least 20°C higher than that of the upper forming mold;
   a gauge pressure applied by the first pressing drive device, which drives the upper forming mold to press on the lower forming mold, is set to range from 0.05MPa to 1.5MPa; and
   a gauge pressure of a negative pressure applied by the first vacuum extraction system is set to be lower than -0.02MPa.

Optionally, during operation:
in the pulse thermal shock unit, the upper heating module is further set at a temperature ranging from 130°C to 250°C, the lower heating module is further set at a temperature ranging from 140°C to 260°C, and a heating duration of each of the upper heating module and the lower heating module is further set to 4s to 35s.

Optionally, during operation:
in the hot-press forming unit, the upper forming mold is further set at a temperature ranging from 80°C to 140°C, the lower forming mold is further set at a temperature ranging from 85°C to 145°C, and the upper forming mold and the lower forming mold are set to perform hot-press forming treatment on the planar dimming film from the thermal transfer unit for 10s to 60s.

Optionally, during operation:
the temperature of the upper heating module is set to be at least 30°C higher than that of the upper forming mold.

Optionally, during operation:
the gauge pressure applied by the first pressing drive device, which drives the upper forming mold to press on the lower forming mold, is further set to range from 0.2MPa to 1.2MPa.

Optionally, the manufacturing device further includes a discharging unit for outputting the curved dimming film from the hot-press forming unit.

Optionally, the manufacturing device further includes:
a cold transfer unit, configured to transfer the curved dimming film processed by the hot-press forming unit under a cooling condition;
a cold-shock shaping unit, configured to perform cold-shock shaping on the curved dimming film from the cold transfer unit; and
a discharging unit, configured to output the curved dimming film from the cold-shock shaping unit.

Optionally, the cold-shock shaping unit includes an upper shaping mold and a lower shaping mold, the upper shaping mold and the lower shaping mold are matched in size and shape, the upper shaping mold is for cold-shock shaping an upper surface of the curved dimming film from the cold transfer unit, and the lower shaping mold is for cold-shock shaping a lower surface of the curved dimming film from the cold transfer unit.

Optionally, the upper shaping mold and the lower shaping mold are independently controllable in heating/cooling temperature.

Optionally, the hot-press forming unit includes an upper forming mold and a lower forming mold, the upper forming mold and the lower forming mold are matched in size and shape, the upper forming mold is for hot-press forming the upper surface of the planar dimming film from the thermal transfer unit, and the lower forming mold is for hot-press forming the lower surface of the planar dimming film from the thermal transfer unit;
the upper forming mold in the hot-press forming unit and the upper shaping mold in the cold-shock shaping unit are matched in size and shape, and the lower forming mold in the hot-press forming unit and the lower shaping mold in the cold-shock shaping unit are matched in size and shape.

Optionally, the upper forming mold and the lower forming mold in the hot-press forming unit, and the upper shaping mold and the lower shaping mold in the cold-shock shaping unit have a same curved-surface function ⊖.

Optionally, the upper shaping mold and the lower shaping mold each has a curved-surface function ⊖ ranging from 0mm/m to 300mm/m.

Optionally, the upper shaping mold and the lower shaping mold each has the curved-surface function ⊖ further ranging from 35mm/m to 250mm/m.

Optionally, a cross-sectional contour of a cross-sectional line of each of the upper shaping mold and the lower shaping mold includes at least one of a circular arc, an elliptical arc, a parabolic curve and an asymmetric curve.

Optionally, in a section of a cross-sectional line at the same stacked position, a ratio of curvature R of the upper shaping mold to the lower shaping mold ranges from 0.9 to 1.1.

Optionally, an opposing surface of the upper shaping mold and/or the lower shaping mold has an uneven structure.

Optionally, the lower shaping mold has dense vacuum extraction channels with a pore diameter of 2 mm or less.

Optionally, the lower shaping mold is connected to a second vacuum extraction system, and the second vacuum extraction system is configured to perform vacuum extraction through the vacuum extraction channels in the lower shaping mold.

Optionally, the manufacturing device further includes a second pressing drive device, where the second pressing drive device is connected to the upper shaping mold and is configured to drive the upper shaping mold to press on the lower shaping mold to perform cold-shock shaping on the curved dimming film from the cold transfer unit, and the lower shaping mold is fixedly arranged.

Optionally, the lower shaping mold is densely distributed with vacuum extraction channels with a pore size of 2mm or less; the lower shaping mold is connected to a second vacuum extraction system, and the second vacuum extraction system is configured to perform vacuum extraction through the vacuum extraction channels in the lower shaping mold;
the manufacturing device further includes a second pressing drive device, the second pressing drive device is connected to the upper shaping mold and is configured to drive the upper shaping mold to press on the lower shaping mold to perform cold-shock shaping on the curved dimming film from the cold transfer unit, and the lower shaping mold is fixedly arranged;
during operation:
   the cold transfer unit is set at a temperature of lower than 40°C, and the cold transfer unit is set to transfer the curved dimming film processed by the hot-press forming unit to the cold-shock shaping unit within 2s to 50s;
   in the cold-shock shaping unit, the upper shaping mold is set at a temperature of lower than 40°C, the lower shaping mold is set at a temperature of lower than 40°C, and the upper shaping mold and the lower shaping mold are set to perform cold-shock shaping treatment on the curved dimming film from the cold transfer unit for 30s to 600s;
   a gauge pressure applied by the second pressing drive device, which drives the upper shaping mold to press on the lower shaping mold, is set to range from 0.05MPa to 1.5MPa;
   a gauge pressure of a negative pressure applied by the second vacuum extraction system is set to be lower than -0.02MPa.

Optionally, during operation:
in the cold-shock shaping unit, the upper shaping mold is further set at a temperature of lower than 30°C, the lower shaping mold is further set at a temperature of lower than 30°C, and the upper shaping mold and the lower shaping mold are set to perform cold-shock shaping treatment on the curved dimming film from the cold transfer unit for 50s to 500s.

Optionally, the gauge pressure applied by the second pressing drive device, which drives the upper shaping mold to press on the lower shaping mold, is further set to range from 0.2MPa to 1.2MPa.

In the present disclosure, the opposing surfaces of the upper forming mold and/or the lower forming mold of the hot-press forming unit have an uneven structure, and a height difference between the highest point and the lowest point of the uneven structure ranges from 1µm to 50µm. Such mold structures are more conducive to fixing the dimming film during the hot-press forming process and preventing displacement between the dimming film and the surface of the mold. The lower forming mold is densely distributed with vacuum extraction channels with a pore size of 2mm or less. During hot-press forming, vacuum extraction is performed through these vacuum extraction channels, such that the dimming film can more closely attach to the surface of the lower forming mold.

In the present disclosure, the opposing surfaces of the upper shaping mold and/or the lower shaping mold of the cold-shock shaping unit have an uneven structure, and a height difference between the highest point and the lowest point of the uneven structure ranges from 1µm to 50µm. Such mold structures are more conducive to fixing the dimming film during the cold-shock shaping process and preventing displacement between the dimming film and the surface of the mold. The lower shaping mold is densely distributed with vacuum extraction channels with a pore size of 2mm or less. During cold-shock shaping, vacuum extraction is performed through these vacuum extraction channels, such that the dimming film can more closely attach to the surface of the lower shaping mold.

In the present disclosure, by precisely controlling the pulse thermal shock and hot-press forming conditions of a planar dimming film, it is ensured that the dimming active layer in the dimming film is not affected by high temperatures, while also allowing softening of the transparent substrates on both sides of the dimming film, thereby obtaining a curved dimming film having a predetermined curved-surface function ⊖. This precise "thermal condition" is crucial. The dimensional change of the dimming film before and after the pulse thermal shock and hot-press forming is controlled to not exceed 10%. The dimensional change refers to a variation in the size of the dimming film in any direction not exceeding 10%, preferably not exceeding 5%. The dimensional change C is defined as the absolute value of (pre-treatment dimension - post-treatment dimension)/pre-treatment dimension × 100%, and the maximum dimensional change in any direction is denoted as Cₘₐₓ, i.e., Cₘₐₓ ≤ 10%, preferably Cₘₐₓ ≤ 5%.

In the present disclosure, the purpose of the cold-shock shaping unit is to prevent the curved dimming film from undergoing elastic recovery deformation during natural cooling after the release of the hot-press forming pressure at elevated temperatures, which would otherwise result in a decrease in the curved-surface function ⊖. The cold-shock shaping unit can effectively prevent the decrease of the curved-surface function ⊖.

Tests show that the manufacturing device for curved dimming film of the present disclosure prepared by pulse thermal shock and hot-press forming on the planar dimming film can produce the curved dimming film with a predetermined size and shape, that is, a predetermined curved-surface function ⊖. Further, the curved dimming film and the corresponding curved glass can be used to produce the curved dimming glass, thereby solving the issue of wrinkling defects on appearance of the curved dimming glass produced by using the planar dimming film in the conventional technology. The device is simple, easy to control, and has good application prospects.

### BRIEF DESCRIPTION OF THE DRAWINGS

FIG. 1 is a top view schematic diagram of an upper forming mold of the present disclosure.
FIG. 2 is a cross-sectional schematic diagram of the upper forming mold in FIG. 1 along the X-X or Y-Y direction.
FIG. 3 is a block diagram of units of a manufacturing device for curved dimming film of the present disclosure.
FIG. 4 is a block diagram of units of another manufacturing device for curved dimming film of the present disclosure.
FIG. 5 is a schematic diagram of a pulse thermal shock unit of the present disclosure.
FIG. 6 is a schematic diagram of a hot-press forming unit and a first pressing drive device of the present disclosure.
FIG. 7 is a schematic diagram of a cold-shock shaping unit and a second pressing drive device of the present disclosure.
FIG. 8 is a photograph showing wrinkles of a dimming glass of Comparative Example 9 of the present disclosure.
FIG. 9 is a photograph showing wrinkles of a dimming glass of Comparative Example 10 of the present disclosure.
FIG. 10 is a photograph showing wrinkles of a dimming glass of Comparative Example 11 of the present disclosure.
FIG. 11 is a photograph showing wrinkles of a dimming glass of Comparative Example 12 of the present disclosure.

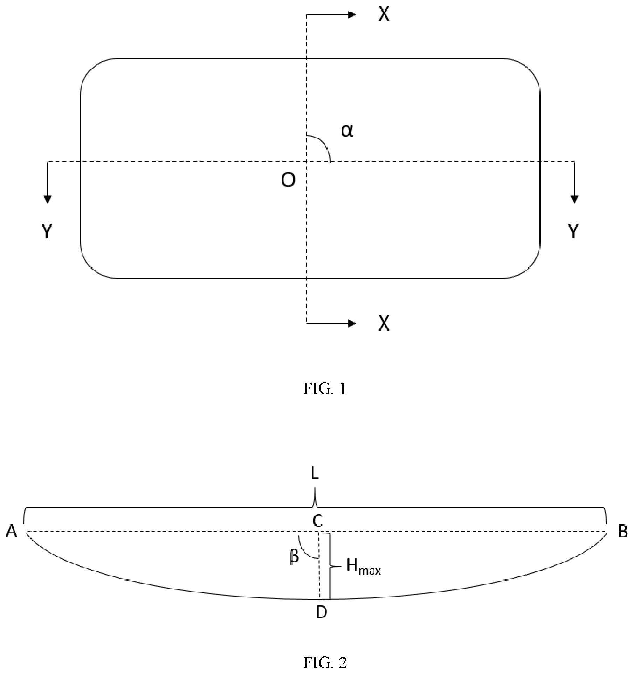

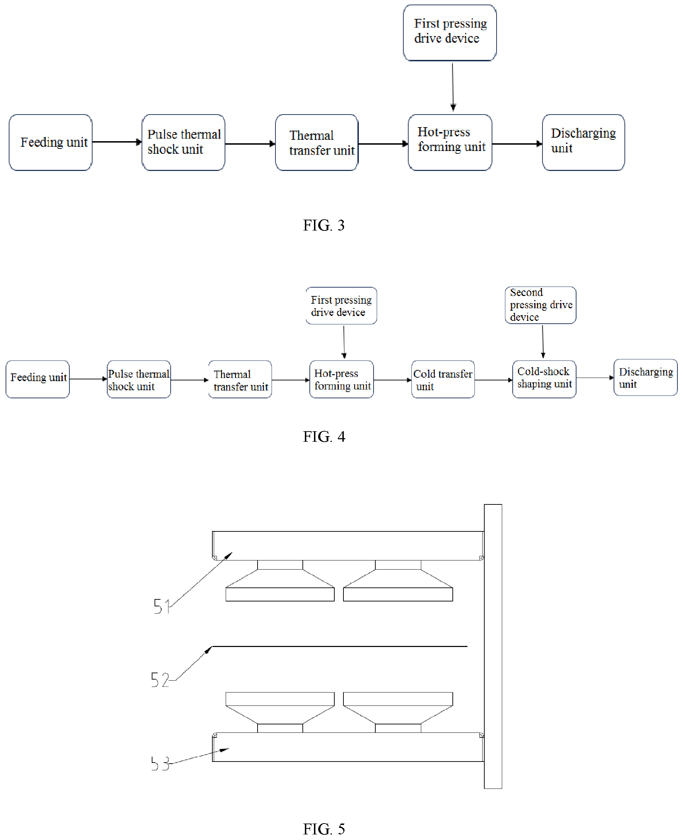

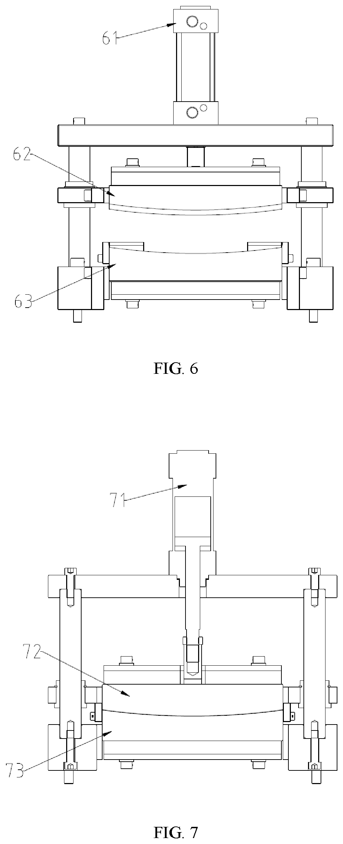

In FIG. 2, the solid curve segment ADB represents the outer surface of the upper forming mold, and the dashed line ACB represents a reference plane. The length of the dashed straight line segment ACB is L (unit: meter), and the length of the dashed straight line segment CD is H (unit: millimeter). The dashed straight line segment CD is perpendicular to the dashed straight line segment ACB, i.e., the included angle β is 90°, where the maximum value of H is denoted as Hₘₐₓ. The included angle between the X-X cross-sectional line and the Y-Y cross-sectional line is α, and 0°<α≤90°, and the intersection point O of the two cross-sectional lines is the center of gravity projection point of the upper forming mold. In FIG. 5, 51 is the upper heating module, 52 is the sample holder, and 53 is the lower heating module. In FIG. 6, 61 is the first pressing drive device, 62 is the upper forming mold, and 63 is the lower forming mold. In FIG. 7, 71 is the second pressing drive device, 72 is the upper shaping mold, and 73 is the lower shaping mold.

### DETAILED DESCRIPTION OF EMBODIMENTS

FIG. 3 shows a block diagram of units of a manufacturing device for curved dimming film provided by the present disclosure. Reference is made to FIG. 3, the manufacturing device includes a feeding unit, a pulse thermal shock unit, a thermal transfer unit and a hot-press forming unit. According to the process flow, the feeding unit is for providing a planar dimming film, the pulse thermal shock unit is for performing a pulse thermal shock on the planar dimming film, the thermal transfer unit is for transferring the planar dimming film processed by the pulse thermal shock unit under thermal insulation, and the hot-press forming unit is for hot-press forming the planar dimming film from the thermal transfer unit to form the curved dimming film. That is, the manufacturing device can perform pulse thermal shock and hot-press forming on the planar dimming film to form curved dimming film. Further, the curved dimming film and the corresponding curved glass can be prepared to obtain the curved dimming glass, thereby solving the problem of wrinkle defects on appearance of curved dimming glass prepared by using planar dimming film in the conventional technology. The device is simple, easy to control, and has good application prospects.

In the present disclosure, reference is made to FIG. 5, the pulse thermal shock unit includes an upper heating module 51 and a lower heating module 53. The upper heating module 51 is for heating an upper surface of the planar dimming film from the feeding unit, and the lower heating module 53 is for heating a lower surface of the planar dimming film from the feeding unit. The upper heating module 51 and the lower heating module 53 can be independently controllable in heating temperature.

In the present disclosure, reference is made to FIG. 5, the pulse thermal shock unit further includes a sample holder 52 arranged between the upper heating module 51 and the lower heating module 53. The sample holder 52 is for placing the planar dimming film from the feeding unit. A distance between the sample holder 52 and the upper heating module 51 is in a range of 2cm to 10cm, and a distance between the sample holder 52 and the lower heating module 53 is in a range of 2cm to 10cm.

In the present disclosure, reference is made to FIG. 6, the hot-press forming unit includes an upper forming mold 62 and a lower forming mold 63. The upper forming mold 62 and the lower forming mold 63 are matched in size and shape. The upper forming mold 62 is for hot-press forming the upper surface of the planar dimming film from the thermal transfer unit, and the lower forming mold 63 is for hot-press forming the lower surface of the planar dimming film from the thermal transfer unit. The upper forming mold 62 and the lower forming mold 63 can be independently controllable in heating temperature.

In the present disclosure, reference is made to FIGs. 1 and 2, the curvature R of the upper forming mold is defined as: curvature R = Hₘₐₓ/L, where the unit of Hₘₐₓ is mm (millimeters), the unit of L is m (meters), and the unit of curvature R is mm/m (millimeters per meter).

In the present disclosure, a curved-surface function ⊖ is used to represent curved characteristics of the upper forming mold, that is, the size and shape of the upper forming mold. The larger the value of the curved-surface function ⊖, the more complex the curved surface. Specifically, the curved-surface function ⊖ is defined as follows: among the values of the curvature R of any cross-section taken along the section line passing through the center of gravity of the upper forming mold and running through the upper forming mold, the maximum curvature R is referred to as Rₘₐₓ, and the minimum curvature R is referred to as Rₘᵢₙ. When Rₘₐₓ>0 and Rₘᵢₙ=0, the curved-surface function ⊖ = Rₘₐₓ/2, such as a single curved surface, where the Rₘₐₓ ranges from 0mm/m to 600mm/m, preferably from 70mm/m to 500mm/m. When Rₘₐₓ=Rₘᵢₙ>0, the curved-surface function ⊖ = Rₘₐₓ, such as an axisymmetric curved surface (spherical surface), where the Rₘₐₓ ranges from 0mm/m to 300mm/m, preferably from 35mm/m to 250mm/m. When Rₘₐₓ>Rₘᵢₙ>0, the curved-surface function ⊖ = (Rₘₐₓ+Rₘᵢₙ)/2, such as double-curved surface and complex curved surface. When Rₘₐₓ=Rₘᵢₙ=0, ⊖=0, indicating a planar surface. The unit of the curved-surface function ⊖ is mm/m (millimeters per meter).

The above definitions of curvature R and curved-surface function ⊖ are both calculated based on the concave or convex surface of the outer surface of any cross-section along the section line passing through the center of gravity of the upper forming mold and running through the upper forming mold. The outer surface of the upper forming mold in FIG. 2 is a convex surface.

In the present disclosure, the definitions of the curvature R and the curved-surface function ⊖ for curved glass, curved dimming film, and lower forming mold are the same as those for the upper forming mold, and will not be repeated herein.

In the present disclosure, the upper forming mold and the lower forming mold of the hot-press forming unit have a predetermined size and shape, that is, a predetermined curved-surface function ⊖. The purpose is to produce a curved dimming film with a predetermined size and shape, that is, a curved dimming film with a predetermined curved-surface function ⊖. Although there is a certain deviation between the curved-surface function ⊖ of the prepared curved dimming film and that of the upper forming mold and the lower forming mold, this is reasonable. As we all know, it is impossible to completely eliminate the hot-cold deformation effect of materials during the thermal processing of materials. Correspondingly, during the preparation of the curved dimming film, it is impossible to completely eliminate the rebound deformation phenomenon during the cooling process of the curved dimming film formed in the hot-press forming unit after the release of hot-press forming pressure at a relatively high temperature. This phenomenon may cause the curved-surface function ⊖ of the curved dimming film to decrease. That is, the curved-surface function ⊖ of the curved dimming film is inconsistent with that of the upper forming mold and the lower forming mold. Apparently, the starting point of the present disclosure is not to provide a technology for preparing a curved dimming film with the same curved-surface function ⊖ as the upper forming mold and the lower forming mold used. Certainly, the present disclosure can provide a device for manufacturing a curved dimming film with a predetermined curved-surface function ⊖ by adjusting the curved-surface function ⊖ of the upper forming mold and the lower forming mold, even though the curved-surface function ⊖ of the upper forming mold and the lower forming mold may not be completely equal to that of the prepared curved dimming film.

Optionally, the upper forming mold 62 and the lower forming mold 63 each may have the curved-surface function ⊖ ranging from 0mm/m to 300mm/m, so as to produce a curved dimming film with a curved-surface function ⊖ ranging from 0mm/m to 300mm/m.

Further optionally, the upper forming mold 62 and the lower forming mold 63 each may have the curved-surface function ⊖ ranging from 35mm/m to 250mm/m, so as to produce a curved dimming film with a curved-surface function ⊖ ranging from 35mm/m to 250mm/m.

In the present disclosure, the cross-sectional contour of a cross-sectional line of each of the upper forming mold 62 and the lower forming mold 63 may include at least one of a circular arc, an elliptical arc, a parabolic curve and an asymmetric curve.

In the present disclosure, in a section of a cross-sectional line at the same stacked position, a ratio of curvature R of the upper forming mold 62 to the lower forming mold 63 ranges from 0.9 to 1.1.

In the present disclosure, an opposing surface of the upper forming mold 62 and/or the lower forming mold 63 of the hot-press forming unit has an uneven structure, and a height difference between the highest point and the lowest point of the uneven structure ranges from 1µm to 50µm. Such the mold structures are more conducive to fixing the dimming film during the hot-press forming process and preventing displacement between the dimming film and the surface of the mold.

In the present disclosure, the lower forming mold 63 of the hot-press forming unit is densely distributed with vacuum extraction channels with a pore size of 2mm or less. The lower forming mold 63 is connected to a first vacuum extraction system, and the first vacuum extraction system is configured to perform vacuum extraction through the vacuum extraction channels in the lower forming mold 63, such that during hot-press forming of the dimming film, the dimming film can more closely attach to the surface of the lower forming mold 63 through the vacuum extraction.

Reference is made to FIGs. 3 and 6, the manufacturing device for the curved dimming film provided by the present disclosure can further include a first pressing drive device 61. The first pressing drive device 61 is connected to the upper forming mold 62, and is configured to drive the upper forming mold 62 to press on the lower forming mold 63 to perform hot-press forming on the planar dimming film from the thermal transfer unit, and the lower forming mold 63 is fixedly arranged. The first pressing drive device 61 utilizes compressed air as the driving power.

During specific operation, in the pulse thermal shock unit, the upper heating module 51 may be set at a temperature ranging from 120°C to 280°C, the lower heating module 53 may be set at a temperature ranging from 130°C to 290°C, the temperature of the lower heating module 53 is set to be 10°C to 15°C higher than that of the upper heating module 51, and a heating duration of the upper heating module 51 and the lower heating module 53 may be set to 3s to 60s. The thermal transfer unit is set at a temperature ranging from 70°C to 130°C, and the thermal transfer unit is set to transfer the planar dimming film processed by the pulse thermal shock unit to the hot-press forming unit within 2s to 50s. In the hot-press forming unit, the upper forming mold 62 may be set at a temperature ranging from 50°C to 180°C, the lower forming mold 63 can be set at a temperature ranging from 55°C to 185°C, the temperature of the lower forming mold 63 is set to be 5°C to 10°C higher than that of the upper forming mold 62, and the upper forming mold 62 and the lower forming mold 63 are set to perform hot-press forming treatment on the planar dimming film from the thermal transfer unit for 5s to 90s. The temperature of the upper heating module 51 is set to be at least 20°C higher than that of the upper forming mold 62. The gauge pressure applied by the first pressing drive device 61, which drives the upper forming mold 62 to press on the lower forming mold 63, is set to be 0.05MPa to 1.5MPa. The gauge pressure of the negative pressure applied by the first vacuum extraction system is set to be lower than -0.02MPa.

Further, during operation of the pulse thermal shock unit, the upper heating module 51 may be set at a temperature ranging from 130°C to 250°C, the lower heating module 53 may be set at a temperature ranging from 140°C to 260°C, and the heating duration of the upper heating module 51 and the lower heating module 53 may be set to 4s to 35s.

Further, during operation of the hot-press forming unit, the upper forming mold 62 may be set at a temperature ranging from 80°C to 140°C, the lower forming mold 63 may be set at a temperature ranging from 85°C to 145°C, and the upper forming mold 62 and the lower forming mold 63 are set to perform hot-press forming treatment on the planar dimming film from the thermal transfer unit for 10s to 60s.

Further, during specific operation, the temperature of the upper heating module 51 may be set to be at least 30°C higher than that of the upper forming mold 62.

Further, during specific operation, the gauge pressure applied by the first pressing drive device 61, which drives the upper forming mold 62 to press on the lower forming mold 63, may be set to 0.2MPa to 1.2MPa.

On the basis of any of the above embodiments, optionally, reference is made to FIG. 3, the manufacturing device for curved dimming film provided by the present disclosure can further include a discharging unit for outputting the curved dimming film from the hot-press forming unit.

FIG. 4 shows a block diagram of units of another manufacturing device for curved dimming film of the present disclosure. Reference is made to FIG. 4, in addition to the aforementioned feeding unit, pulse thermal shock unit, thermal transfer unit and hot-press forming unit, the manufacturing device further includes a cold transfer unit, a cold-shock shaping unit and a discharging unit. The cold transfer unit is for transferring the curved dimming film processed by the hot-press forming unit under a cooling condition, the cold-shock shaping unit is for cold-shock shaping the curved dimming film from the cold transfer unit, and the discharging unit is for outputting the curved dimming film from the cold-shock shaping unit. As known from the foregoing, during the preparation of curved dimming film, it is impossible to completely eliminate the rebound deformation phenomenon during the cooling process of the curved dimming film formed in the hot-press forming unit after the release of hot-press forming pressure at a relatively high temperature. This phenomenon may cause the curved-surface function ⊖ of the curved dimming film to decrease. Based on this, through the cold-shock shaping unit, the present disclosure further minimizes the problem of the decrease of the curved-surface function ⊖ of the curved dimming film caused by shrinkage.

In the present disclosure, reference is made to FIG. 7, the cold-shock shaping unit includes an upper shaping mold 72 and a lower shaping mold 73. The upper shaping mold 72 and the lower shaping mold 73 are matched in size and shape. The upper shaping mold 72 is for cold-shock shaping the upper surface of the curved dimming film from the cold transfer unit, and the lower shaping mold 73 is for cold-shock shaping the lower surface of the curved dimming film from the cold transfer unit. The upper shaping mold 72 and the lower shaping mold 73 can be independently controllable in heating/cooling temperature.

In the present disclosure, the upper shaping mold 72 and the lower shaping mold 73 of the cold-shock shaping unit have a predetermined size and shape, and the upper shaping mold 72 and the lower shaping mold 73 are matched in size and shape. As known from the foregoing, the upper forming mold 62 and the lower forming mold 63 of the hot-press forming unit have a predetermined size and shape, and the upper forming mold 62 and the lower forming mold 63 are matched in size and shape. In addition, the upper forming mold 62 in the hot-press forming unit and the upper shaping mold 72 in the cold-shock shaping unit are matched in size and shape. Similarly, the lower forming mold 63 in the hot-press forming unit and the lower shaping mold 73 in the cold-shock shaping unit are matched in size and shape. That is, the upper forming mold 62, the lower forming mold 63 in the hot-press forming unit, and the upper shaping mold 72 and the lower shaping mold 73 in the cold-shock shaping unit are all matched in size and shape. Specifically, the upper forming mold 62, the lower forming mold 63 in the hot-press forming unit, and the upper shaping mold 72 and the lower shaping mold 73 in the cold-shock shaping unit have the same curved-surface function ⊖.

In the present disclosure, the curved-surface function ⊖ of the mold is equivalent to the curved-surface function ⊖ of the upper forming mold and/or lower forming mold of the hot-press forming unit, and the upper shaping mold and/or lower shaping mold of the cold-shock shaping unit.

In the present disclosure, the definitions of the curvature R and the curved-surface function ⊖ for the curved glass, curved dimming film, lower forming mold, upper shaping mold, and lower shaping mold are the same as those for the upper forming mold, and thus they will not be repeated.

Thus, it can be understood that, in the present disclosure, optionally, the upper shaping mold 72 and the lower shaping mold 73 may have the curved-surface function ⊖ ranging from 0mm/m to 300mm/m. Further optionally, the upper shaping mold 72 and the lower shaping mold 73 may have the curved-surface function ⊖ ranging from 35mm/m to 250mm/m.

In the present disclosure, the cross-sectional contour of a cross-sectional line of each of the upper shaping mold 72 and the lower shaping mold 73 includes at least one of a circular arc, an elliptical arc, a parabolic curve and an asymmetric curve.

In the present disclosure, in a section of a cross-sectional line at the same stacked position, a ratio of curvature R of the upper shaping mold 72 to the lower shaping mold 73 ranges from 0.9 to 1.1.

In the present disclosure, the opposing surfaces of the upper shaping mold 72 and/or the lower shaping mold 73 of the cold-shock shaping unit have an uneven structure, and the height difference between the highest point and the lowest point of the uneven structure ranges from 1µm to 50µm. Such the mold structures are more conducive to fixing the dimming film during the cold-shock shaping process and preventing displacement between the dimming film and the surface of the mold.

In the present disclosure, the lower shaping mold 73 of the cold-shock shaping unit is densely distributed with vacuum extraction channels with a pore size of 2mm or less. The lower shaping mold 73 is connected to a second vacuum extraction system, and the second vacuum extraction system is configured to perform vacuum extraction through the vacuum extraction channels in the lower shaping mold 73, such that the dimming film can more closely attach to the surface of the lower shaping mold 73 through the vacuum extraction during cold-shock shaping of the dimming film.

Reference is made to FIGs. 4 and 7, the manufacturing device for the curved dimming film provided by the present disclosure can further include a second pressing drive device 71. The second pressing drive device 71 is connected to the upper shaping mold 72, and is for driving the upper shaping mold 72 to press on the lower shaping mold 73 to perform cold-shock shaping on the curved dimming film from the cold transfer unit, and the lower shaping mold 73 is fixedly arranged. The second pressing drive device 71 utilizes compressed air as the driving power.

During specific operation, parameters of the pulse thermal shock unit, thermal transfer unit, hot-press forming unit and the first pressing drive device are set as described above. The cold transfer unit may be set at a temperature of lower than 40°C, and the cold transfer unit is set to transfer the curved dimming film processed by the hot-press forming unit to the cold-shock shaping unit within 2s to 50s. In the cold-shock shaping unit, the upper shaping mold 72 may be set at a temperature of lower than 40°C, the lower shaping mold 73 may be set at a temperature of lower than 40°C, and the upper shaping mold 72 and the lower shaping mold 73 are set to perform cold-shock shaping treatment on the curved dimming film from the cold transfer unit for 30s to 600s. The gauge pressure applied by the second pressing drive device 71, which drives the upper shaping mold 72 to press on the lower shaping mold 73, is set to range from 0.05MPa to 1.5MPa. The gauge pressure of the negative pressure applied by the second vacuum extraction system may be set to be lower than -0.02MPa.

Further, during operation of the cold-shock shaping unit, the upper shaping mold 72 may be set at a temperature of lower than 30°C, the lower shaping mold 73 can be set at a temperature of lower than 30°C, and the upper shaping mold 72 and the lower shaping mold 73 are set to perform cold-shock shaping on the curved dimming film from the cold transfer unit for 50s to 500s.

Further, during specific operation, the gauge pressure applied by the second pressing drive device 71, which drives the upper shaping mold 72 to press on the lower shaping mold 73, may be set to range from 0.2MPa to 1.2MPa.

In the present disclosure, the first vacuum extraction system and the second vacuum extraction system may be the same vacuum extraction system or different vacuum extraction systems, which depend on the specific situation.

In the present disclosure, the compressed air of the first pressing drive device 61 and the compressed air of the second pressing drive device 71 can be provided by the same compressed air system or different compressed air systems, which depend on the specific situation.

Based on the manufacturing device for curved dimming film provided by the present disclosure, it can be understood that the method for manufacturing curved dimming film using the manufacturing device provided by the present disclosure is carried out by sequentially subjecting the planar dimming film to pulse thermal shock and hot-press forming, where the first step of pulse thermal shock is completed in the pulse thermal shock unit, and the second step of hot-press forming is completed in the hot-press forming unit. Further optionally, after the pulse thermal shock and hot-press forming steps, a third step of cold-shock shaping may be further included, and the third step of cold-shock shaping is completed in the cold-shock shaping unit.

Considering that the curved dimming film includes a first transparent substrate, a first transparent conductive layer formed on the first transparent substrate, a second transparent substrate, a second transparent conductive layer formed on the second transparent substrate, where the first transparent conductive layer and the second transparent conductive layer are oppositely arranged, and a dimming active layer arranged between the first transparent conductive layer and the second transparent conductive layer. The dimming active layer is selected from at least one of suspended particle dimming active layer, polymer dispersed liquid crystal dimming active layer, and electrochromic dimming active layer. The present disclosure can ensure that the dimming active layer in the dimming film is not affected by high temperature through precise control of the pulse thermal shock and hot-press forming conditions for the planar dimming film, while the transparent substrates on both sides of the dimming film are softened to achieve the curved dimming film with a predetermined curved-surface function ⊖.

Further, the curved dimming film with a predetermined curved-surface function ⊖ obtained by the manufacturing device provided by the present disclosure may be used to produce the curved dimming glass. Specifically, the curved glass, curved dimming film and an interlayer are layered in accordance with the structure of the curved dimming glass, and then subjected to lamination treatment to obtain the curved dimming glass.

As we all know, the curved characteristics are quite complex, and the curved-surface function ⊖ defined by the present disclosure is intended to simply and clearly describe the curved characteristics through the parameter. The starting point of the present disclosure is to provide a device for manufacturing the curved dimming film. Apparently, the purpose of the curved dimming film is to produce the curved glass, and one of the more specific purposes is to produce the double-curved automotive sunroof dimming glass.

Further, due to limitations in the processability of curved glass, the curved surfaces of manufactured curved dimming glass rarely have localized protrusions or depressions.

Further, in practical applications, in consideration of aesthetic requirements, curved dimming glass generally has a certain degree of symmetry, and the undulations of the curved surface are typically continuous and smooth.

Further, in practical applications, in consideration of cost-effectiveness and ease of processing, the curved surface of curved dimming glass is generally not very complex.

Further, for simple curved dimming glass, such as a hemispherical curved surface, the top view is circular, and the cross-sectional view in both the X-X direction and the Y-Y direction are circular arc segments (reference is made to FIG. 2), Rₘₐₓ=Rₘᵢₙ>0. Such a curved surface can be specifically described by the curved-surface function ⊖.

Further, for simple curved dimming glass, reference is made to FIG. 2, Rₘₐₓ=Rₘᵢₙ>0. Such a curved surface can be specifically described by the curved-surface function ⊖.

Further, for certain simple curved surfaces, such as a single curved surface, the top view is as shown in FIG. 1, the cross-sectional contour of the cross-sectional line along the X-X direction is a circular arc segment, reference is made to FIG. 2, the cross-sectional contour of the cross-sectional line along the Y-Y direction is a straight line, with α being 90°, and Rₘₐₓ > 0 and Rₘᵢₙ = 0. Such a curved surface can be specifically described by the curved-surface function ⊖.

Further, a single-curved surface has at least two planes of symmetry, and a spherical surface has infinitely many planes of symmetry. Since these have already been discussed above, they are not further categorized herein as simple curved surfaces having symmetry. For simple curved surfaces having symmetry, such as multi-curved surfaces having at least two planes of symmetry, the top schematic view may be rectangular, regular polygonal, or the like, and the cross-sectional contour of the cross-sectional line is a circular arc. Such curved surfaces are relatively common.

Further, specifically for double-curved automotive sunroof dimming glass, the top schematic view is generally approximately rectangular, and the closer to the middle of the sunroof dimming glass, the greater the raised height thereof. For such curved automotive sunroof dimming glass, in order to describe the surface characteristics more simply and clearly, the calculation method of the curved-surface function ⊖ may be further simplified. Specifically, the curvature R is calculated based on cross-sections taken along two mutually perpendicular cross-sectional lines that are parallel to any two sides of the rectangle, pass through the centroid of the curved dimming glass, and extend through the laminated structure thereof. Such a method provides a simple and clear description of the surface characteristics. The curvature R of the cross-section along the X-X direction is denoted as R_{X-X}, and the curvature R of the cross-section along the Y-Y direction is denoted as R_{Y-Y}. In the specific embodiments of the present disclosure, this simplified method is used to describe the surface characteristics of double-curved automotive sunroof dimming glass. In general, for double-curved automotive sunroof dimming glass, both R_{X-X} and R_{Y-Y} are greater than 0, and thus the curved-surface function ⊖ = (R_{X-X} + R_{Y-Y}) / 2. The X-X direction refers to the forward and backward direction of the vehicle, and the Y-Y direction refers to the width direction of the vehicle body. Generally, the curvature R of the cross-section along the X-X direction is greater than that along the Y-Y direction.

It can be seen from the above definition of the curved-surface function ⊖ that, when the curved-surface function ⊖ is the same, the dimming glass of a single-curved surface is more curved than that of a double-curved surface. As is well known, it is more difficult for double-curved dimming glass than single-curved dimming glass to avoid wrinkling problems. Therefore, it is apparent that using the curved-surface function ⊖ defined in the present disclosure to represent surface characteristics is more reasonable than using a single curvature R. The fundamental reason is that the curved-surface function ⊖ takes into account the case of double-curved surfaces while also accommodating more complex curved surfaces, that is, the curved-surface function ⊖ fully reflects the characteristic that automotive sunroof dimming glass is basically double-curved.

From the above application scenarios of the curved dimming film, the shape of the curved dimming glass in practical applications is not particularly complex. Specifically, for the present disclosure, the curved surface of the mold is not particularly complex.

In the present disclosure, the concepts of the upper forming mold and the lower forming mold merely indicate the relative positional relationship of the molds and are not limiting conditions. The relationship is not necessarily an upper-lower relationship, and may also be a front-rear, left-right, or other positional relationship. Similarly, the concepts of the upper shaping mold and the lower shaping mold merely indicate the relative positional relationship of the mold and are not limiting conditions. The relationship is not necessarily an upper-lower relationship, and may also be a front-rear, left-right, or other positional relationship. On this basis, the lower forming mold and/or the lower shaping mold has dense vacuum extraction channels with a pore diameter of 2 mm or less. Alternatively, the upper forming mold and/or the upper shaping mold has dense vacuum extraction channels with a pore diameter of 2 mm or less. However, both corresponding molds shall not simultaneously have dense vacuum extraction channels.

In the present disclosure, the working surfaces of the upper forming mold, lower forming mold, upper shaping mold, and lower shaping mold can be convex or concave, but the working surfaces of the upper forming mold and the lower forming mold must correspond to each other, that is, if one is convex, and the other is concave. The working surfaces of the upper shaping mold and the lower shaping mold must correspond to each other, that is, if one is convex, the other is concave. The concave/convex directions of the working surfaces of the forming mold and the shaping mold does not need to be consistent. That is, when the working surface of the upper forming mold is convex, the working surface of the upper shaping mold may be either convex or concave. However, the size and shape of the working surfaces of the molds should be matched, that is, the curved-surface function ⊖ needs to be equal.

In the present disclosure, after a planar dimming film is sequentially subjected to pulse thermal shock and hot-press forming, the dimming performance T of the curved dimming film is measured as follows: 16 points are uniformly selected on each square meter of the curved dimming film, and the visible light transmittance at each of the 16 points without applying a power supply is measured and recorded as Toff1 to Toff16. Then, a corresponding operating power supply is applied to the curved dimming film, and the visible light transmittance at each of the 16 points is measured and recorded as Ton1 to Ton16. The ΔT value for each point is then calculated, for example, ΔT1 = Ton1 - Toff1, and so on. The maximum ΔT value is denoted as ΔTₘₐₓ, and the minimum ΔT value is denoted as ΔTₘᵢₙ. The dimming performance T is defined as: T = (ΔT1 + ΔT2 + ΔT3 + ... + ΔT16) / 16. The measurement method for the dimming uniformity U of the curved dimming film is as follows: U = (ΔTₘₐₓ - ΔTₘᵢₙ) / T, where U ≤ 5% is regarded as "normal," and U > 5% is regarded as "abnormal." The selection of 16 uniformly distributed test points per square meter of the curved dimming film for measuring and calculating the dimming performance T and the dimming uniformity U is not a mandatory requirement. If the area of the curved dimming film is smaller or larger, the number of selected test points may be adjusted, so long as the selected points are sufficient to demonstrate the performance of the curved dimming film. It is apparent that at least two test points are required. The operating power supplies for different curved dimming films are not the same. For example, suspended particle curved dimming films are generally connected to 110 V, 60 Hz alternating current; polymer dispersed liquid crystal curved dimming films are generally connected to 60 V, 60 Hz alternating current; and electrochromic curved dimming films are generally connected to 3 V direct current. The specific operating power supply is selected according to the product requirements of the planar dimming film.

In the present disclosure, the methods for measuring the dimming performance T and the dimming uniformity U of the curved dimming glass are the same as those for the curved dimming film, and thus are not repeated herein.

The present disclosure manufactures curved dimming glass using curved glass corresponding to the curved dimming film. If the curved surfaces of the curved dimming film and the curved glass are similar surfaces, that is, the curves of sections along any corresponding cross-sectional lines on the curved surfaces are similar curves, then the curved dimming film and the curved glass are in an ideal fitting state. However, such perfect fitting is not required in the present disclosure. In the present disclosure, the method for manufacturing the curved dimming glass provides a curved dimming film having a curved-surface function ⊖ ranging from 0 mm/m to 300 mm/m, which attaches to the curved glass. As is well known, the area of the curved dimming film should match that of the curved glass. It is apparent from the definition of the curved-surface function ⊖ in the present disclosure that, even when two curved surfaces have the same curved-surface function ⊖, their surface areas may be different. The fit described in the present disclosure has three aspects, which must be satisfied simultaneously: (1) the area of the curved dimming film is comparable to that of the curved glass, so as to meet the general requirements for dimming glass; (2) the curved-surface function ⊖ of the curved dimming film ranges from 20 mm/m to 300 mm/m; and (3) in a section of a cross-sectional line at the same stacked position, the ratio of curvature R of the curved glass to curvature R of the corresponding curved dimming film ranges from 0.7 to 1.3. The measurement method is as follows: the curved glass and the curved dimming film are each equally divided into 25 sections along corresponding cross-sectional lines, and the ratio of the curvature R of the curved glass to the curvature R of the corresponding curved dimming film is calculated for each section. Among the resulting 25 ratio values, the minimum value and the maximum value are taken as the starting value and the ending value, respectively, and are defined as the range of the ratio of curvature R of sections of the cross-sectional line at same stacked position for the curved glass and the corresponding curved dimming film.

The present disclosure will be further elaborated below through examples.

### [Example 1] Manufacturing a double-curved dimming film

A planar suspended particle device dimming film was subjected to pulse thermal shock and hot-press forming. In the hot-press forming, the curved-surface function ⊖ of the upper forming mold and the lower forming mold was 40 mm/m, and the transfer duration from the pulse thermal shock step to the hot-press forming step was 50 seconds, thereby obtaining a curved dimming film having a curved-surface function ⊖ of 35 mm/m. As shown in FIG. 1, the curved dimming film was in an approximately rectangular shape; and as shown in FIG. 2, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 2] Manufacturing a double-curved dimming film

A planar suspended particle device dimming film was subjected to pulse thermal shock and hot-press forming. In the hot-press forming, the curved-surface function ⊖ of the upper forming mold and the lower forming mold was 83 mm/m, and the transfer duration from the pulse thermal shock step to the hot-press forming step was 40 seconds, thereby obtaining a curved dimming film having a curved-surface function ⊖ of 76 mm/m. As shown in FIG. 1, the curved dimming film was in an approximately rectangular shape; and as shown in FIG. 2, the cross-sectional contours of the cross-sectional lines in the X-X and Y-Y directions were approximately circular arcs. The dimming performance T and dimming uniformity U thereof were tested, and the specific parameters are shown in Table 1.

### [Example 3] Manufacturing a double-curved dimming film

A planar suspended particle device dimming film was subjected to pulse thermal shock and hot-press forming. In the hot-press forming, the curved-surface function ⊖ of the upper forming mold and the lower forming mold was 168 mm/m, and the transfer duration from the pulse thermal shock step to the hot-press forming step was 30 seconds, thereby obtaining a curved dimming film having a curved-surface function ⊖ of 150 mm/m. As shown in FIG. 1, the curved dimming film was in an approximately rectangular shape; and as shown in FIG. 2, the cross-sectional contours of the cross-sectional lines in the X-X and Y-Y directions were approximately parabolic curves. The dimming performance T and dimming uniformity U thereof were tested, and the specific parameters are shown in Table 1.

### [Example 4] Manufacturing a double-curved dimming film

A planar electrochromic dimming film was subjected to pulse thermal shock and hot-press forming. In the hot-press forming, the curved-surface function ⊖ of the upper forming mold and the lower forming mold was 85 mm/m, and the transfer duration from the pulse thermal shock step to the hot-press forming step was 50 seconds, thereby obtaining a curved dimming film having a curved-surface function ⊖ of 71 mm/m. As shown in FIG. 1, the curved dimming film was in an approximately rectangular shape; and as shown in FIG. 2, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 5] Manufacturing a double-curved dimming film

A planar electrochromic dimming film was subjected to pulse thermal shock and hot-press forming. In the hot-press forming, the curved-surface function ⊖ of the upper forming mold and the lower forming mold was 55 mm/m, and the transfer duration from the pulse thermal shock step to the hot-press forming step was 50 seconds, thereby obtaining a curved dimming film having a curved-surface function ⊖ of 48 mm/m. As shown in FIG. 1, the curved dimming film was in an approximately rectangular shape; and as shown in FIG. 2, the cross-sectional contours of the cross-sectional lines in the X-X and Y-Y directions were approximately circular arcs. The dimming performance T and dimming uniformity U thereof were tested, and the specific parameters are shown in Table 1.

### [Example 6] Manufacturing a double-curved dimming film

A planar electrochromic dimming film was subjected to pulse thermal shock and hot-press forming. In the hot-press forming, the curved-surface function ⊖ of the upper forming mold and the lower forming mold was 285 mm/m, and the transfer duration from the pulse thermal shock step to the hot-press forming step was 10 seconds, thereby obtaining a curved dimming film having a curved-surface function ⊖ of 262 mm/m. As shown in FIG. 1, the curved dimming film was in an approximately rectangular shape; and as shown in FIG. 2, the cross-sectional contours of the cross-sectional lines in the X-X and Y-Y directions were approximately parabolic curves. The dimming performance T and dimming uniformity U thereof were tested, and the specific parameters are shown in Table 1.

### [Example 7] Manufacturing a double-curved dimming film

A planar polymer dispersed liquid crystal dimming film was subjected to pulse thermal shock and hot-press forming. In the hot-press forming, the curved-surface function ⊖ of the upper forming mold and the lower forming mold was 30 mm/m, and the transfer duration from the pulse thermal shock step to the hot-press forming step was 25 seconds, thereby obtaining a curved dimming film having a curved-surface function ⊖ of 26 mm/m. As shown in FIG. 1, the curved dimming film was in an approximately rectangular shape; and as shown in FIG. 2, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 8] Manufacturing a double-curved dimming film

A planar polymer dispersed liquid crystal dimming film was subjected to pulse thermal shock and hot-press forming. In the hot-press forming, the curved-surface function ⊖ of the upper forming mold and the lower forming mold was 204 mm/m, and the transfer duration from the pulse thermal shock step to the hot-press forming step was 5 seconds, thereby obtaining a curved dimming film having a curved-surface function ⊖ of 185 mm/m. As shown in FIG. 1, the curved dimming film was in an approximately rectangular shape; and as shown in FIG. 2, the cross-sectional contours of the cross-sectional lines in the X-X and Y-Y directions were approximately circular arcs. The dimming performance T and dimming uniformity U thereof were tested, and the specific parameters are shown in Table 1.

### [Example 9] Manufacturing a double-curved dimming film

A planar polymer dispersed liquid crystal dimming film was subjected to pulse thermal shock, hot-press forming, and cold shock shaping, thereby obtaining a curved dimming film having a curved-surface function ⊖ of 290 mm/m. The cold shock shaping conditions were as follows: a temperature of 20°C, a gauge pressure of 0.5 MPa, and treatment in the mold for a duration of 150 seconds. In the hot-press forming, the curved-surface function ⊖ of the upper forming mold and the lower forming mold was 295 mm/m; and in the cold shock shaping, the curved-surface function ⊖ of the upper shaping mold and the lower shaping mold was 295 mm/m. The transfer duration from the pulse thermal shock step to the hot-press forming step was 10 seconds, and the transfer duration from the hot-press forming step to the cold shock shaping step was 10 seconds. As shown in FIG. 1, the curved dimming film was in an approximately rectangular shape; and as shown in FIG. 2, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 10] Manufacturing a double-curved dimming film

The method was same as [Example 3], except that the curved dimming film after pulse thermal shock and hot-press forming was rapidly placed into a cold shock shaping mold and treated in the mold at 30°C under a gauge pressure of 0.5 MPa for 100 seconds, where the curved-surface function ⊖ of the upper shaping mold and the lower shaping mold for the cold shock shaping was 168 mm/m, thereby obtaining a curved dimming film with a curved-surface function ⊖ of 162 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 11] Manufacturing a double-curved dimming film

The method was same as [Example 6], except that the curved dimming film after pulse thermal shock and hot-press forming was rapidly placed into a cold shock shaping mold and treated in the mold at 10°C under a gauge pressure of 1.0 MPa for 200 seconds, where the curved-surface function ⊖ of the upper shaping mold and the lower shaping mold for the cold shock shaping was 285 mm/m, thereby obtaining a curved dimming film with a curved-surface function ⊖ of 276 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 12] Manufacturing a double-curved dimming film

The method was same as [Example 3], except that the curved-surface function ⊖ of the upper forming mold and the lower forming mold for the hot-press forming was 22 mm/m, thereby obtaining a curved dimming film having a curved-surface function ⊖ of 20 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 13] Manufacturing a double-curved dimming film

The method was same as [Example 3], except that the curved-surface function ⊖ of the upper forming mold and the lower forming mold for the hot-press forming was 22 mm/m, thereby obtaining a curved dimming film having a curved-surface function ⊖ of 20 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 14] Manufacturing a double-curved dimming film

The method was same as [Example 3], except that the curved-surface function ⊖ of the upper forming mold and the lower forming mold for the hot-press forming was 5 mm/m, thereby obtaining a curved dimming film having a curved-surface function ⊖ of 4 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 15] Manufacturing a double-curved dimming film

The method was same as [Example 10], except that the curved-surface function ⊖ of the upper forming mold and the lower forming mold for the hot-press forming, and the curved-surface function ⊖ of the upper shaping mold and the lower shaping mold for the cold shock shaping were both 5 mm/m, thereby obtaining a curved dimming film having a curved-surface function ⊖ of 5 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Example 16] Manufacturing a double-curved dimming film

The method was same as [Example 10], except that the curved-surface function ⊖ of the upper forming mold and the lower forming mold for the hot-press forming and the curved-surface function ⊖ of the upper shaping mold and the lower shaping mold for the cold shock shaping were both 3 mm/m, thereby obtaining a curved dimming film having a curved-surface function ⊖ of 3 mm/m. Reference is made to FIG. 1, the film is approximately rectangular. The cross-sectional contours of the cross-sectional lines in the X-X and Y-Y directions are approximately parabolic curve, as shown in FIG. 2. The dimming performance T and dimming uniformity U are tested, and the specific parameters are shown in Table 2.

### [Comparative Example 1] A double-curved dimming film

The method was same as [Example 2], except that the pulse thermal shock time in the first step was changed from 3 seconds to 100 seconds, and a curved dimming film having a curved-surface function ⊖ of 76 mm/m was obtained. The dimming performance T and dimming uniformity U thereof were tested. Since the pulse thermal shock time in the first step exceeded 60 seconds and reached 100 seconds, the dimming performance T of the curved dimming film was attenuated to only 15.6%, and the dimming uniformity U was abnormal. The specific parameters are shown in Table 3.

### [Comparative Example 2] A double-curved dimming film

The method was same as [Example 3], except that the hot-press forming temperature in the second step was changed from 120°C to 30°C, and a curved dimming film having a curved-surface function ⊖ of 18 mm/m was obtained. The dimming performance T and dimming uniformity U thereof were tested. Since the hot-press forming temperature in the second step was lower than 50°C and was only 30°C, the curved-surface function ⊖ of the prepared curved dimming film was too small and was only 18 mm/m. The specific parameters are shown in Table 3.

### [Comparative Example 3] A double-curved dimming film

The method was same as [Example 4], except that the pulse thermal shock temperature in the first step was changed from 250°C to 80°C, and a curved dimming film having a curved-surface function ⊖ of 19 mm/m was obtained. The dimming performance T and dimming uniformity U thereof were tested. Since the pulse thermal shock temperature in the first step was lower than 120°C and was only 80°C, the curved-surface function ⊖ of the prepared curved dimming film was too small and was only 19 mm/m. The specific parameters are shown in Table 3.

### [Comparative Example 4] A double-curved dimming film

The method was same as [Example 5], except that the hot-press forming time in the second step was changed from 25 seconds to 125 seconds, and a curved dimming film having a curved-surface function ⊖ of 48 mm/m was obtained. The dimming performance T and dimming uniformity U thereof were tested. Since the hot-press forming time in the second step exceeded 90 seconds and reached 125 seconds, the dimming performance T of the curved dimming film was attenuated to only 10.1%, and the dimming uniformity U was abnormal. The specific parameters are shown in Table 3.

### [Comparative Example 5] A double-curved dimming film

The method was same as [Example 7], except that the gauge pressure during the hot-press forming in the second step was changed from 0.4 MPa to 2.0 MPa, and a curved dimming film having a curved-surface function ⊖ of 26 mm/m was obtained. The dimming performance T and dimming uniformity U thereof were tested. Since the gauge pressure during the second step of hot-press forming exceeded 1.5 MPa and reached 2.0 MPa, the dimming performance T of the curved dimming film was attenuated to only 12.1%, and the dimming uniformity U was abnormal. The specific parameters are shown in Table 3.

### [Comparative Example 6] A double-curved dimming film

The method was same as [Example 8], except that the pulse thermal shock temperature in the first step was changed from 240°C to 300°C, and a curved dimming film having a curved-surface function ⊖ of 195 mm/m was obtained. The dimming performance T and dimming uniformity U thereof were tested. Since the pulse thermal shock temperature in the first step exceeded 280°C and reached 300°C, the dimming performance T of the curved dimming film was attenuated to only 17.6%, and the dimming uniformity U was abnormal. The specific parameters are shown in Table 3.

### [Comparative Example 7] A double-curved dimming film

The method was same as [Example 3], except that the first step of pulse thermal shock and thermal transfer were omitted. The dimming performance T and dimming uniformity U thereof were tested. The specific parameters are shown in Table 3. Since the first step of pulse thermal shock was absent, the obtained curved-surface function ⊖ was too small, only 13 mm/m.

### [Comparative Example 8] A double-curved dimming film

The method was same as [Example 3], except that the first step of pulse thermal shock and thermal transfer were omitted and the hot-press forming temperature in the second step was 280°C. The dimming performance T and dimming uniformity U thereof were tested. The specific parameters are shown in Table 3. Since the first step of pulse thermal shock was absent and the hot-press forming temperature in the second step was too high, the dimming performance T of the curved dimming film was attenuated to only 15.3%, and the dimming uniformity U was abnormal.

### [Example 17] A double-curved automotive sunroof dimming glass

The curved dimming film of [Example 1], an EVA film, and ordinary clear glass were used, where the curved-surface function ⊖ was 35 mm/m.

The layers were layered according to the structure of the dimming glass, and lamination was performed in an autoclave. The lamination conditions were as follows: a temperature of 110°C, vacuuming for 10 minutes, gradual pressurization to 450 kPa, and holding for 60 minutes.

A curved dimming glass was prepared. The dimming glass had a normal appearance without wrinkles. The dimming performance T and dimming uniformity U thereof were tested, and the specific parameters are shown in Table 4.

### [Example 18] A double-curved automotive sunroof dimming glass

The method was same as [Example 17], except that the curved dimming film of [Example 1] was replaced with the curved dimming film of [Example 2], the EVA film was replaced with the PVB film, and the ordinary clear glass was replaced with brown-tinted glass, with a curved-surface function ⊖ of 70mm/m. The dimming performance T and dimming uniformity U are tested, and the specific parameters are shown in Table 4.

### [Example 19] A double-curved automotive sunroof dimming glass

The method was same as [Example 17], except that the curved dimming film of [Example 1] was replaced with the curved dimming film of [Example 3], the EVA film was replaced with TPU film, the ordinary clear glass was replaced with PC sheet, with a curved-surface function ⊖ of 155mm/m. The dimming performance T and dimming uniformity U are tested, and the specific parameters are shown in Table 4.

### [Example 20] A double-curved automotive sunroof dimming glass

The method was same as [Example 17], except that the curved dimming film of [Example 1] was replaced with the curved dimming film of [Example 4], and the ordinary clear glass had a curved-surface function ⊖ of 71mm/m. The dimming performance T and dimming uniformity U are tested, and the specific parameters are shown in Table 4.

### [Example 21] A double-curved automotive sunroof dimming glass

The method was same as [Example 17], except that the curved dimming film of [Example 1] was replaced with the curved dimming film of [Example 5], the EVA film was replaced with PVB film, and the ordinary clear glass was replaced with IR barrier glass, with a curved-surface function ⊖ of 50mm/m. The dimming performance T and dimming uniformity U are tested, and the specific parameters are shown in Table 4.

### [Example 22] A double-curved automotive sunroof dimming glass

The method was same as [Example 17], except that the curved dimming film of [Example 1] was replaced with the curved dimming film of [Example 6], the EVA film was replaced with TPU film, and the ordinary clear glass was replaced with PC sheet, with a curved-surface function ⊖ of 265mm/m. The dimming performance T and dimming uniformity U are tested, and the specific parameters are shown in Table 4.

### [Example 23] A double-curved automotive sunroof dimming glass

The method was same as [Example 17], except that the curved dimming film of [Example 1] was replaced with the curved dimming film of [Example 7], and the ordinary clear glass had a curved-surface function ⊖ of 30mm/m. The dimming performance T and dimming uniformity U are tested, and the specific parameters are shown in Table 4.

### [Example 24] A double-curved automotive sunroof dimming glass

The method was same as [Example 17], except that the curved dimming film of [Example 1] was replaced with the curved dimming film of [Example 8], the EVA film was replaced with the PVB film, and the ordinary clear glass was replaced with PMMA sheet with a curved-surface function ⊖ of 180mm/m. The dimming performance T and dimming uniformity U are tested, and the specific parameters are shown in Table 4.

### [Example 25] A double-curved automotive sunroof dimming glass

The method was same as [Example 17], except that the curved dimming film of [Example 1] was replaced with the curved dimming film of [Example 9], the EVA film was replaced with TPU film, and the ordinary clear glass was replaced with PC sheet with a curved-surface function ⊖ of 290mm/m. The dimming performance T and dimming uniformity U are tested, and the specific parameters are shown in Table 4.

### [Comparative Example 9] A planar dimming glass

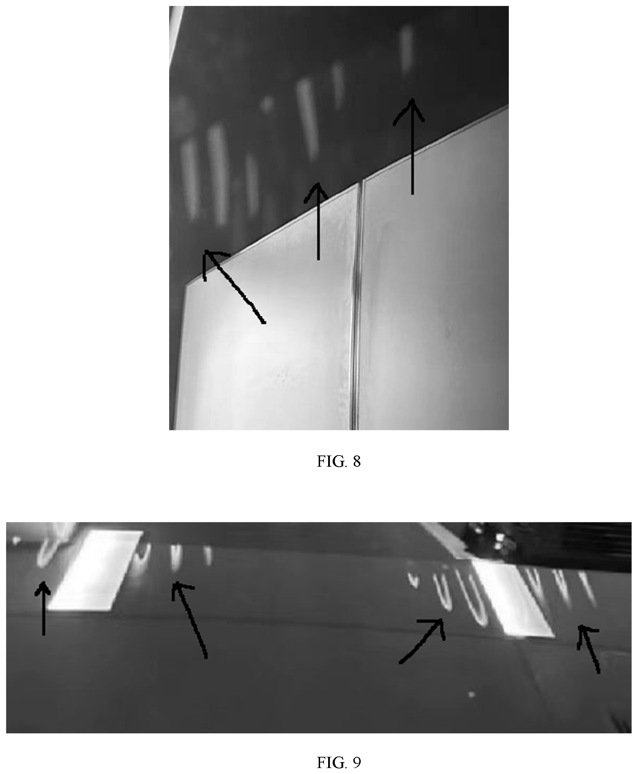

The method was same as [Example 17], except that the ordinary clear glass was replaced with a flat glass (curved-surface function ⊖ is 0 mm/m). The dimming performance T and dimming uniformity U thereof were tested, and the specific parameters are shown in Table 4. Wrinkles were observed at the edges of the dimming glass, as shown in FIG. 8, with arrows indicating the wrinkles. It can be seen that using flat glass with a curved dimming film to prepare dimming glass easily causes wrinkling.

### [Comparative Example 10] A double-curved dimming glass

The method was same as [Example 17], except that the curved dimming film in [Example 1] was replaced with a planar dimming film (curved-surface function ⊖ is 0 mm/m). The dimming performance T and dimming uniformity U were tested, with specific parameters shown in Table 4. The edges of the dimming glass exhibit obvious wrinkles, as shown in FIG. 9, where the arrows indicate the wrinkles. It can be seen that using a planar dimming film with curved glass tends to generate wrinkles in the obtained dimming glass.

### [Comparative Example 11] A double-curved dimming glass

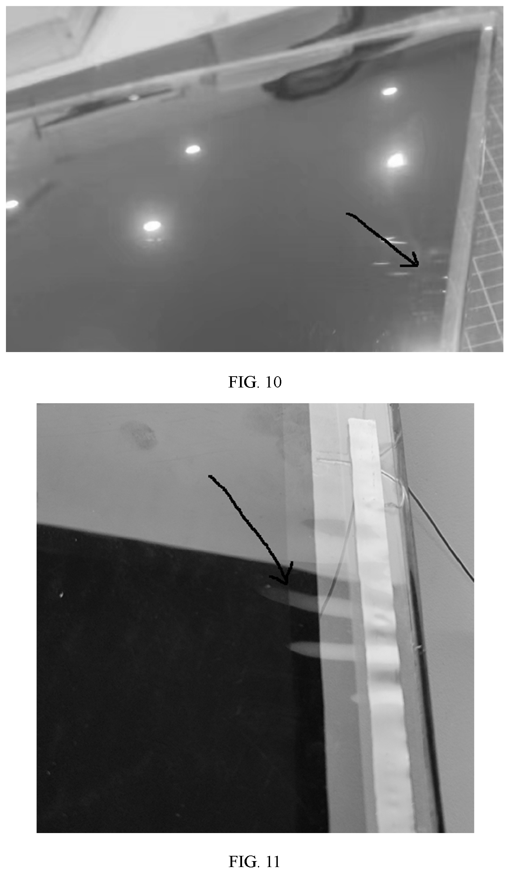

The method was same as [Example 17], except that the ordinary clear glass had a curved-surface function ⊖ of 50 mm/m, and the ratio of curvature R of curved glass / curved dimming film ranged from 1.10 to 1.63. The dimming performance T and dimming uniformity U were tested, with specific parameters shown in Table 4. The edges of the dimming glass exhibit obvious wrinkles, as shown in FIG. 10, where the arrows indicate the wrinkles. It can be seen that when the ratio of curvature R of curved glass / curved dimming film exceeded the range of 0.7-1.3, wrinkles were prone to exist.

### [Comparative Example 12] A double-curved dimming glass

The method was same as [Example 17], except that the ordinary clear glass had a curved-surface function ⊖ of 50 mm/m, and the curved dimming film had a curved-surface function ⊖ of 80 mm/m, and the ratio of curvature R of curved glass / curved dimming film ranged from 0.45 to 0.81. The dimming performance T and dimming uniformity U were tested, with specific parameters shown in Table 4. The edges of the dimming glass exhibit obvious wrinkles, as shown in FIG. 11, where the arrows indicate the wrinkles. It can be seen that when the ratio of curvature R of curved glass / curved dimming film exceeded the range of 0.7-1.3, wrinkles were prone to exist.

**Table 1 Parameters of curved dimming film**

| Sample | | Example 1 | Example 2 | Example 3 | Example 4 | Example 5 | Example 6 | Example 7 | Example 8 | Example 9 |
|---|---|---|---|---|---|---|---|---|---|---|
| Pulse thermal shock unit | Upper heating module/°C | 150 | 280 | 200 | 250 | 210 | 200 | 180 | 240 | 260 |
| | Lower heating module/°C | 160 | 290 | 210 | 260 | 220 | 210 | 195 | 250 | 270 |
| | Heating duration/s | 50 | 3 | 15 | 40 | 20 | 60 | 40 | 30 | 15 |
| Thermal transfer unit | Temperature/°C | 120 | 70 | 90 | 80 | 120 | 110 | 130 | 75 | 85 |
| | Duration/s | 50 | 40 | 30 | 50 | 50 | 10 | 25 | 5 | 10 |
| Hot-press forming unit | Upper forming mold /°C | 120 | 50 | 120 | 80 | 140 | 180 | 100 | 90 | 50 |
| | Lower forming mold /°C | 125 | 60 | 125 | 90 | 145 | 185 | 110 | 100 | 60 |
| | Processing time/s | 30 | 70 | 40 | 80 | 25 | 5 | 10 | 20 | 90 |
| | Gauge pressure /MPa | 1.2 | 1.0 | 0.2 | 0.6 | 0.05 | 1.5 | 0.4 | 1.0 | 0.8 |
| | Relative Negative Pressure /MPa | -0.05 | -0.08 | -0.02 | -0.03 | -0.05 | -0.06 | -0.02 | -0.02 | -0.02 |
| | Curved-surface function Θ of upper forming mold /mm/m | 40 | 83 | 168 | 85 | 55 | 285 | 30 | 204 | 295 |
| | Curved-surface function Θ of lower forming mold /mm/m | 40 | 83 | 168 | 85 | 55 | 285 | 30 | 204 | 295 |
| Cold | Temperature/°C | X | X | X | X | X | X | X | X | 30 |
| transfer unit | Duration/s | X | X | X | X | X | X | X | X | 10 |
| Cold-shock shaping unit | Upper shaping mold /°C | X | X | X | X | X | X | X | X | 20 |
| | Lower shaping mold /°C | X | X | X | X | X | X | X | X | 20 |
| | Processing time /s | X | X | X | X | X | X | X | X | 150 |
| | Gauge pressure /MPa | X | X | X | X | X | X | X | X | 0.5 |
| | Relative negative pressure /MPa | X | X | X | X | X | X | X | X | -0.05 |
| | Curved-surface function Θ of upper shaping mold / mm/m | X | X | X | X | X | X | X | X | 295 |
| | Curved-surface function Θ of lower shaping mold / mm/m | X | X | X | X | X | X | X | X | 295 |
| Curved dimming film | R_{X-X}/mm/m | 40 | 80 | 150 | 80 | 50 | 264 | 26 | 190 | 300 |
| | R_{Y-Y}/ mm/m | 30 | 72 | 150 | 62 | 46 | 260 | 26 | 180 | 280 |
| | Curved-surface function Θ/ mm/m | 35 | 76 | 150 | 71 | 48 | 262 | 26 | 185 | 290 |
| | Cₘₐₓ/% | 4.8 | 7.1 | 8.1 | 8.9 | 4.4 | 7.8 | 3.7 | 7.9 | 5.8 |
| | T/% | 51.2 | 53.4 | 50.7 | 53.2 | 52.6 | 53.4 | 55.0 | 54.3 | 50.9 |
| | U | Normal | Normal | Normal | Normal | Normal | Normal | Normal | Normal | Normal |

| | | | | | | | | | | |
|---|---|---|---|---|---|---|---|---|---|---|
| Note: X means not available, the relative negative pressure refers to the gauge pressure of the negative pressure provided by the vacuum extraction system. | | | | | | | | | | |

**Table 2 Parameters of curved dimming film**

| Sample | | Example 10 | Example 11 | Example 12 | Example 13 | Example 14 | Example 15 | Example 16 |
|---|---|---|---|---|---|---|---|---|
| Pulse thermal shock unit | Upper heating module/°C | 200 | 200 | 200 | 200 | 200 | 200 | 200 |
| | Lower heating module/°C | 210 | 210 | 210 | 210 | 210 | 210 | 210 |
| | Heating duration/s | 15 | 60 | 15 | 15 | 15 | 15 | 15 |
| Thermal transfer unit | Temperature/°C | 90 | 110 | 90 | 90 | 90 | 90 | 90 |
| | Duration/s | 30 | 10 | 30 | 30 | 30 | 30 | 30 |
| Hot-press forming unit | Upper forming mold /°C | 120 | 180 | 120 | 120 | 120 | 120 | 120 |
| | Lower forming mold /°C | 125 | 185 | 125 | 125 | 125 | 125 | 125 |
| | Processing time/s | 40 | 5 | 40 | 40 | 40 | 40 | 40 |
| | Gauge pressure /MPa | 0.2 | 1.5 | 0.2 | 0.2 | 0.2 | 0.2 | 0.2 |
| | Relative Negative Pressure /MPa | -0.02 | -0.06 | -0.02 | -0.02 | -0.02 | -0.02 | -0.02 |
| | Curved-surface function ⊖ of upper forming mold /mm/m | 168 | 285 | 22 | 15 | 5 | 5 | 3 |
| | Curved-surface function ⊖ of lower forming mold /mm/m | 168 | 285 | 22 | 15 | 5 | 5 | 3 |
| Cold transfer unit | Temperature/°C | 40 | 20 | X | X | X | 40 | 40 |
| | Duration/s | 10 | 30 | X | X | X | 10 | 10 |
| Cold-shock shaping unit | Upper shaping mold /°C | 30 | 10 | X | X | X | 30 | 30 |
| | Lower shaping mold /°C | 30 | 10 | X | X | X | 30 | 30 |
| | Processing time /s | 100 | 200 | X | X | X | 100 | 100 |
| | Gauge pressure /MPa | 0.5 | 1.0 | X | X | X | 0.5 | 0.5 |
| | Relative negative pressure /MPa | -0.05 | -0.05 | X | X | X | -0.05 | -0.05 |
| | Curved-surface function Θ of upper shaping mold / mm/m | 168 | 285 | X | X | X | 5 | 3 |
| | Curved-surface function Θ of lower shaping mold / mm/m | 168 | 285 | X | X | X | 5 | 3 |
| Curved dimming film | R_{X-X}/mm/m | 165 | 275 | 20 | 15 | 4 | 5 | 3 |
| | R_{Y-Y}/ mm/m | 159 | 277 | 20 | 13 | 4 | 5 | 3 |
| | Curved-surface function Θ/ mm/m | 162 | 276 | 20 | 14 | 4 | 5 | 3 |
| | Cₘₐₓ/% | 6.2 | 5.8 | 4.1 | 3.8 | 1.2 | 1.5 | 1.0 |
| | T/% | 50.9 | 51.8 | 50.8 | 50.3 | 51.2 | 51.0 | 50.7 |
| | U | Normal | Normal | Normal | Normal | Normal | Normal | Normal |

| | | | | | | | | |
|---|---|---|---|---|---|---|---|---|
| Note: X means not available, the relative negative pressure refers to the gauge pressure of the negative pressure provided by the vacuum extraction system. | | | | | | | | |

**Table 3 Parameters of Curved dimming film**

| Sample | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|
| Pulse thermal shock unit | Upper heating module/° C | 280 | 200 | 80 | 210 | 180 | 300 | X | X |
| | Lower heating module/° C | 290 | 210 | 90 | 220 | 195 | 310 | X | X |
| | Heating duration/s | 100 | 15 | 40 | 20 | 40 | 30 | X | X |
| Thermal transfer unit | Temperature/°C | 70 | 90 | 80 | 120 | 130 | 75 | X | X |
| | Duration/s | 40 | 30 | 50 | 50 | 25 | 5 | X | X |
| Hot-press forming unit | Upper forming mold /°C | 50 | 30 | 80 | 140 | 100 | 90 | 120 | 280 |
| | Lower forming mold /°C | 60 | 30 | 90 | 145 | 110 | 100 | 125 | 290 |
| | Processing time/s | 70 | 40 | 80 | 125 | 10 | 20 | 40 | 40 |
| | Gauge pressure /MPa | 1.0 | 0.2 | 0.6 | 0.5 | 2.0 | 1.0 | 0.2 | 0.2 |
| | Relative Negative Pressure /MPa | -0.08 | -0.02 | -0.03 | -0.05 | -0.02 | -0.02 | -0.02 | -0.02 |
| | Curved- | 83 | 168 | 85 | 55 | 30 | 204 | 168 | 168 |
| | surface function Θ of upper forming mold /mm/m | | | | | | | | |
| | Curved-surface function Θ of lower forming mold /mm/m | 83 | 168 | 85 | 55 | 30 | 204 | 168 | 168 |
| Cold transfer unit | Temperature/°C | X | X | X | X | X | X | X | X |
| | Duration/s | X | X | X | X | X | X | X | X |
| Cold-shock shaping unit | Upper shaping mold /°C | X | X | X | X | X | X | X | X |
| | Lower shaping mold /°C | X | X | X | X | X | X | X | X |
| | Processing time /s | X | X | X | X | X | X | X | X |
| | Gauge pressure /MPa | X | X | X | X | X | X | X | X |
| | Relative negative pressure /MPa | X | X | X | X | X | X | X | X |
| | Curved- | X | X | X | X | X | X | X | X |
| | surface function Θ of upper shaping mold / mm/m | | | | | | | | |
| | Curved-surface function Θ of lower shaping mold / mm/m | X | X | X | X | X | X | X | X |
| Curved dimming film | R_{X-X}/mm/m | 82 | 18 | 20 | 52 | 26 | 206 | 13 | 156 |
| | R_{Y-Y}/ mm/m | 70 | 18 | 18 | 44 | 26 | 204 | 13 | 144 |
| | Curved-surface function Θ/ mm/m | 76 | 18 | 19 | 48 | 26 | 195 | 13 | 150 |
| | Cₘₐₓ/% | 11.1 | 2.7 | 3.5 | 4.4 | 7.4 | 12.5 | 2.1 | 8.5 |
| | T/% | 15.6 | 51.8 | 52.4 | 10.1 | 12.1 | 17.6 | 52.4 | 15.3 |
| | U | Abnormal | Normal | Normal | Abnormal | Abnormal | Abnormal | Normal | Abnormal |

| | | | | | | | | | |
|---|---|---|---|---|---|---|---|---|---|
| Note: X means not available, the relative negative pressure refers to the gauge pressure of the negative pressure provided by the vacuum extraction system. | | | | | | | | | |

**Table 4 Parameters of Curved dimming glass**

| Sample | Dimming film | Interlayer | Ratio range of R of Glass / R of Dimming film | Transparent glass | | Dimming glass | | |
|---|---|---|---|---|---|---|---|---|
| | | | | Type | Θ | wrinkles | T | U |
| Example 17 | Example 1 | EVA | 0.85~1.20 | Ordinary clear glass | 35 | No | 49.2% | Normal |
| Example 18 | Example 2 | PVB | 0.70~1.15 | Brown-tinted glass | 70 | No | 31.4% | Normal |
| Example 19 | Example 3 | TPU | 0.91~1.20 | PC sheet | 155 | No | 48.7% | Normal |
| Example 20 | Example 4 | EVA | 0.92~1.30 | Ordinary clear glass | 71 | No | 51.1% | Normal |
| Example 21 | Example 5 | PVB | 1.00~1.20 | IR barrier glass | 50 | No | 48.5% | Normal |
| Example 22 | Example 6 | TPU | 0.76~1.26 | PC sheet | 265 | No | 49.3% | Normal |
| Example 23 | Example 7 | EVA | 0.92~1.28 | Ordinary clear glass | 30 | No | 51.0% | Normal |
| Example 24 | Example 8 | PVB | 0.83~1.11 | PMMA sheet | 180 | No | 50.0% | Normal |
| Example 25 | Example 9 | TPU | 0.90~1.13 | PC sheet | 290 | No | 48.7% | Normal |
| Comparative example 9 | Example 1 | EVA | X | Ordinary clear glass | 0 | Yes | 48.7% | Normal |
| Comparative example 10 | Planar dimming film | EVA | X | Ordinary clear glass | 35 | Yes | 49.0% | Normal |
| Comparative example 11 | Example 1 | EVA | 1.10~1.63 | Ordinary clear glass | 50 | Yes | 47.9% | Normal |
| Comparative example 12 | Example 1 | EVA | 0.45~0.81 | Ordinary clear glass | 50 | Yes | 48.2% | Normal |

| | | | | | | | | |
|---|---|---|---|---|---|---|---|---|
| Note: X means not applicable. | | | | | | | | |

Comparison between [Comparative Example 1] and [Example 2] indicates that extending the pulse thermal shock duration in the first step from 3 seconds to 100 seconds causes attenuation of the dimming performance T of the curved dimming film to only 15.6%, and results in abnormal dimming uniformity U and curved dimming film is local non-uniform. Comparison between [Comparative Example 2] and [Example 3] indicates that reducing the temperature of the upper forming mold in the second-step hot-press forming from 120°C to 30°C causes the curved-surface function ⊖ of the curved dimming film to be lower than 20 mm/m, specifically only 18 mm/m. Comparison between [Comparative Example 3] and [Example 4] indicates that reducing the temperature of the upper heating module in the first step of pulse thermal shock from 250°C to 80°C causes the curved-surface function ⊖ of the curved dimming film to be lower than 20 mm/m, specifically only 19 mm/m. Comparison between [Comparative Example 4] and [Example 5] indicates that extending the hot-press forming time in the second step from 25 seconds to 125 seconds causes attenuation of the dimming performance T of the curved dimming film to only 10.1%, and results in abnormal dimming uniformity U and curved dimming film is local non-uniform. Comparison between [Comparative Example 5] and [Example 7] indicates that increasing the gauge pressure of hot-press forming in the second step from 0.4 MPa to 2.0 MPa causes attenuation of the dimming performance T of the curved dimming film to only 12.1%, and results in abnormal dimming uniformity U and curved dimming film is local non-uniform. Comparison between [Comparative Example 6] and [Example 8] indicates that increasing the temperature of the upper heating module in the first step of pulse thermal shock from 240°C to 300°C causes attenuation of the dimming performance T of the curved dimming film to only 17.6%, and results in abnormal dimming uniformity U and curved dimming film is local non-uniform. Comparison between [Comparative Example 7] and [Example 3] indicates that without the first step of pulse thermal shock, the resulting curved dimming film has a relatively low curved-surface function ⊖ of only 13 mm/m. Comparison between [Comparative Example 8] and [Example 3] indicates that without the first step of the pulse thermal shock, and with the temperature of the upper forming mold in the second step of hot-press forming increased to 280°C, the resulting curved dimming film has a normal curved-surface function ⊖; however, due to the excessively high temperature in the second step of hot-press forming, the dimming performance T of the curved dimming film is attenuated to only 15.3%, the dimming uniformity U is abnormal and curved dimming film is local non-uniform.

In view of above, during the pulse thermal shock and hot-press forming processes, each process parameter is critical. Without the first step of pulse thermal shock, it is difficult to prepare a curved dimming film having normal dimming performance T and dimming uniformity U, with a curved-surface function ⊖ ranging from 20 mm/m to 300 mm/m.

Comparison between [Example 3] and [Example 10], and between [Example 6] and [Example 11], indicates that by adding a cold shock shaping step, a curved dimming film having a slightly higher curved-surface function ⊖ can be prepared. This additional step can prevent the curved dimming film formed by hot-press shaping from springback deformation during the natural cooling process after release of the forming pressure at relatively high temperature, thereby avoiding a reduction in the curved-surface function ⊖.

Comparison between [Comparative Example 9] and [Example 17] indicates that wrinkles are generated when planar glass is laminated with a curved dimming film to prepare planar dimming glass. Comparison between [Comparative Example 10] and [Example 17] indicates that wrinkles are generated when curved glass is laminated with a planar dimming film to prepare curved dimming glass. Comparison between [Comparative Examples 11 to 12] and [Examples 17 to 25] indicates that, during preparation of curved dimming glass, wrinkles are generated when the ratio of curvature R of curved glass/ curvature R of curved dimming film falls outside the range of 0.7-1.3.

In view of above, during the preparation of curved dimming glass, the curved dimming film needs to be used in combination with corresponding curved glass; in other words, the curved glass needs to be used in combination with a corresponding curved dimming film.

In the present disclosure, obvious differences exist in the dimming performance T of curved dimming glass prepared using the same type of curved dimming film. For example, the dimming performance T of [Example 17] is 49.2%, whereas that of [Example 18] is only 31.4%. This difference is caused by the different curved glass used during preparation of the curved dimming glass. As is well known, curved glass of different colors has different visible light transmittance values, and in some cases the differences may be significant. Of course, in certain application scenarios, curved dimming glass having a dimming performance T of greater than or equal to 5% can satisfy practical use requirements.

It can be seen from [Example 13] and [Example 14] that after performing pulse thermal shock and hot-press forming on the planar dimming film by using the manufacturing device of curved dimming film in the present disclosure, the curved dimming film with a curved-surface function ⊖ of less than 20mm/m can be produced. The curved dimming film produced in [Example 13] has a curved-surface function ⊖ of 14mm/m, and that the curved dimming film produced in [Example 14] has a curved-surface function ⊖ of 4mm/m.

It can be seen from [Example 15] and [Example 16] that after performing pulse thermal shock, hot-press forming and cold-shock shaping on the planar dimming film by using the manufacturing device of curved dimming film in the present disclosure, the curved dimming film with a curved-surface function ⊖ of less than 20mm/m can be produced. The curved dimming film produced in [Example 15] has a curved-surface function ⊖ of 5mm/m, and the curved dimming film produced in [Example 16] has a curved-surface function ⊖ of 3mm/m.

Apparently, the manufacturing device of curved dimming film provided by the present disclosure can produce the curved dimming film with a curved-surface function ⊖ ranging from 0mm/m to 300mm/m.

In summary, the manufacturing device of curved dimming film of the present disclosure produces a curved dimming film with a predetermined curved-surface function ⊖ by means of performing pulse thermal shock and hot-press forming on the planar dimming film, and further utilizes the corresponding curved glass to produce the curved dimming glass. This can avoid the appearance defect of wrinkles of the dimming film caused by using planar dimming film to produce the curved dimming glass, and is of great significance.

## Claims

1. A manufacturing device for curved dimming film, comprising:
a feeding unit, configured to provide a planar dimming film;
a pulse thermal shock unit, configured to perform a pulse thermal shock on the planar dimming film;
a thermal transfer unit, configured to transfer the planar dimming film processed by the pulse thermal shock unit under thermal insulation; and
a hot-press forming unit, configured to perform hot-press forming on the planar dimming film from the thermal transfer unit to form the curved dimming film.

2. The manufacturing device for curved dimming film according to claim 1, wherein the pulse thermal shock unit comprises an upper heating module and a lower heating module, the upper heating module is for heating an upper surface of the planar dimming film from the feeding unit, and the lower heating module is for heating a lower surface of the planar dimming film from the feeding unit.

3. The manufacturing device for curved dimming film according to claim 2, wherein the heating temperature of the upper heating module and the lower heating module are independently controllable.

4. The manufacturing device for curved dimming film according to claim 2, wherein the pulse thermal shock unit further comprises a sample holder arranged between the upper heating module and the lower heating module, the sample holder is for placing the planar dimming film from the feeding unit, a distance between the sample holder and the upper heating module is in a range of 2cm to 10cm, and a distance between the sample holder and the lower heating module is in a range of 2cm to 10cm.

5. The manufacturing device for curved dimming film according to claim 1, wherein the hot-press forming unit comprises an upper forming mold and a lower forming mold, the upper forming mold and the lower forming mold are matched in size and shape, the upper forming mold is for hot-press forming the upper surface of the planar dimming film from the thermal transfer unit, and the lower forming mold is for hot-press forming the lower surface of the planar dimming film from the thermal transfer unit.

6. The manufacturing device for curved dimming film according to claim 5, wherein the heating temperature of the upper forming mold and the lower forming mold are independently controllable.

7. The manufacturing device for curved dimming film according to claim 5, wherein the upper forming mold and the lower forming mold each has a curved-surface function ⊖ ranging from 0mm/m to 300mm/m.

8. The manufacturing device for curved dimming film according to claim 7, wherein the upper forming mold and the lower forming mold each has the curved-surface function ⊖ further ranging from 35mm/m to 250mm/m.

9. The manufacturing device for curved dimming film according to claim 5, wherein a cross-sectional contour of a cross-sectional line of each of the upper forming mold and the lower forming mold comprises at least one of a circular arc, an elliptical arc, a parabolic curve and an asymmetric curve.

10. The manufacturing device for curved dimming film according to claim 5, wherein in a section of a cross-sectional line at the same stacked position, a ratio of curvature R of the upper forming mold to the lower forming mold ranges from 0.9 to 1.1.

11. The manufacturing device for curved dimming film according to claim 5, wherein an opposing surface of the upper forming mold and/or the lower forming mold has an uneven structure.

12. The manufacturing device for curved dimming film according to claim 5, wherein the lower forming mold has dense vacuum extraction channels with a pore diameter of 2 mm or less.

13. The manufacturing device for curved dimming film according to claim 12, wherein the lower forming mold is connected to a first vacuum extraction system, and the first vacuum extraction system is configured to perform vacuum extraction through the vacuum extraction channels in the lower forming mold.

14. The manufacturing device for curved dimming film according to claim 5, further comprising a first pressing drive device, wherein the first pressing drive device is connected to the upper forming mold and is configured to drive the upper forming mold to press on the lower forming mold to perform hot-press forming on the planar dimming film from the thermal transfer unit, and the lower forming mold is fixedly arranged.

15. The manufacturing device for curved dimming film according to claim 5, wherein the pulse thermal shock unit comprises an upper heating module and a lower heating module, the upper heating module is for heating an upper surface of the planar dimming film from the feeding unit, and the lower heating module is for heating a lower surface of the planar dimming film from the feeding unit;
the lower forming mold is densely distributed with vacuum extraction channels with a pore size of 2mm or less; the lower forming mold is connected to a first vacuum extraction system, and the first vacuum extraction system is configured to perform vacuum extraction through the vacuum extraction channels in the lower forming mold;
the manufacturing device further comprises a first pressing drive device, the first pressing drive device is connected to the upper forming mold and is configured to drive the upper forming mold to press on the lower forming mold to perform hot-press forming on the planar dimming film from the thermal transfer unit, and the lower forming mold is fixedly arranged;
during operation:
in the pulse thermal shock unit, the upper heating module is set at a temperature ranging from 120°C to 280°C, the lower heating module is set at a temperature ranging from 130°C to 290°C, the temperature of the lower heating module is set to be 10°C to 15°C higher than that of the upper heating module, and a heating duration of each of the upper heating module and the lower heating module is set to 3s to 60s;
the thermal transfer unit is set at a temperature ranging from 70°C to 130°C, and the thermal transfer unit is set to transfer the planar dimming film processed by the pulse thermal shock unit to the hot-press forming unit within 2s to 50s;
in the hot-press forming unit, the upper forming mold is set at a temperature ranging from 50°C to 180°C, the lower forming mold is set at a temperature ranging from 55°C to 185°C, the temperature of the lower forming mold is set to be 5°C to 10°C higher than that of the upper forming mold, and the upper forming mold and the lower forming mold are set to perform hot-press forming treatment on the planar dimming film from the thermal transfer unit for 5s to 90s;
the temperature of the upper heating module is set to be at least 20°C higher than that of the upper forming mold;
a gauge pressure applied by the first pressing drive device, which drives the upper forming mold to press on the lower forming mold, is set to range from 0.05MPa to 1.5MPa; and
a gauge pressure of a negative pressure applied by the first vacuum extraction system is set to be lower than -0.02MPa.

16. The manufacturing device for curved dimming film according to claim 15, wherein during operation:
in the pulse thermal shock unit, the upper heating module is further set at a temperature ranging from 130°C to 250°C, the lower heating module is further set at a temperature ranging from 140°C to 260°C, and a heating duration of each of the upper heating module and the lower heating module is further set to 4s to 35s.

17. The manufacturing device for curved dimming film according to claim 15, wherein during operation:
in the hot-press forming unit, the upper forming mold is further set at a temperature ranging from 80°C to 140°C, the lower forming mold is further set at a temperature ranging from 85°C to 145°C, and the upper forming mold and the lower forming mold are set to perform hot-press forming treatment on the planar dimming film from the thermal transfer unit for 10s to 60s.

18. The manufacturing device for curved dimming film according to claim 15, wherein during operation:
the temperature of the upper heating module is set to be at least 30°C higher than that of the upper forming mold.

19. The manufacturing device for curved dimming film according to claim 15, wherein during operation:
the gauge pressure applied by the first pressing drive device, which drives the upper forming mold to press on the lower forming mold, is further set to range from 0.2MPa to 1.2MPa.

20. The manufacturing device for curved dimming film according to any one of claims 1 to 19, further comprising a discharging unit for outputting the curved dimming film from the hot-press forming unit.

21. The manufacturing device for curved dimming film according to claim 1, further comprising:
a cold transfer unit, configured to transfer the curved dimming film processed by the hot-press forming unit under a cooling condition;
a cold-shock shaping unit, configured to perform cold-shock shaping on the curved dimming film from the cold transfer unit; and
a discharging unit, configured to output the curved dimming film from the cold-shock shaping unit.

22. The manufacturing device for curved dimming film according to claim 21, wherein the cold-shock shaping unit comprises an upper shaping mold and a lower shaping mold, the upper shaping mold and the lower shaping mold are matched in size and shape, the upper shaping mold is for cold-shock shaping an upper surface of the curved dimming film from the cold transfer unit, and the lower shaping mold is for cold-shock shaping a lower surface of the curved dimming film from the cold transfer unit.

23. The manufacturing device for curved dimming film according to claim 22, wherein the upper shaping mold and the lower shaping mold are independently controllable in heating/cooling temperature.

24. The manufacturing device for curved dimming film according to claim 22, wherein the hot-press forming unit comprises an upper forming mold and a lower forming mold, the upper forming mold and the lower forming mold are matched in size and shape, the upper forming mold is for hot-press forming the upper surface of the planar dimming film from the thermal transfer unit, and the lower forming mold is for hot-press forming the lower surface of the planar dimming film from the thermal transfer unit;
the upper forming mold in the hot-press forming unit and the upper shaping mold in the cold-shock shaping unit are matched in size and shape, and the lower forming mold in the hot-press forming unit and the lower shaping mold in the cold-shock shaping unit are matched in size and shape.

25. The manufacturing device for curved dimming film according to claim 24, wherein the upper forming mold and the lower forming mold in the hot-press forming unit, and the upper shaping mold and the lower shaping mold in the cold-shock shaping unit have a same curved-surface function ⊖.

26. The manufacturing device for curved dimming film according to claim 22, wherein the upper shaping mold and the lower shaping mold each has a curved-surface function ⊖ ranging from 0mm/m to 300mm/m.

27. The manufacturing device for curved dimming film according to claim 26, wherein the upper shaping mold and the lower shaping mold each has the curved-surface function ⊖ further ranging from 35mm/m to 250mm/m.

28. The manufacturing device for curved dimming film according to claim 22, wherein a cross-sectional contour of a cross-sectional line of each of the upper shaping mold and the lower shaping mold comprises at least one of a circular arc, an elliptical arc, a parabolic curve and an asymmetric curve.

29. The manufacturing device for curved dimming film according to claim 22, wherein in a section of a cross-sectional line at the same stacked position, a ratio of curvature R of the upper shaping mold to the lower shaping mold ranges from 0.9 to 1.1.

30. The manufacturing device for curved dimming film according to claim 22, wherein an opposing surface of the upper shaping mold and/or the lower shaping mold has an uneven structure.

31. The manufacturing device for curved dimming film according to claim 22, wherein the lower shaping mold has dense vacuum extraction channels with a pore diameter of 2 mm or less.

32. The manufacturing device for curved dimming film according to claim 31, wherein the lower shaping mold is connected to a second vacuum extraction system, and the second vacuum extraction system is configured to perform vacuum extraction through the vacuum extraction channels in the lower shaping mold.

33. The manufacturing device for curved dimming film according to claim 22, further comprising a second pressing drive device, wherein the second pressing drive device is connected to the upper shaping mold and is configured to drive the upper shaping mold to press on the lower shaping mold to perform cold-shock shaping on the curved dimming film from the cold transfer unit, and the lower shaping mold is fixedly arranged.

34. The manufacturing device for curved dimming film according to claim 22, wherein the lower shaping mold is densely distributed with vacuum extraction channels with a pore size of 2mm or less; the lower shaping mold is connected to a second vacuum extraction system, and the second vacuum extraction system is configured to perform vacuum extraction through the vacuum extraction channels in the lower shaping mold;
the manufacturing device further comprises a second pressing drive device, the second pressing drive device is connected to the upper shaping mold and is configured to drive the upper shaping mold to press on the lower shaping mold to perform cold-shock shaping on the curved dimming film from the cold transfer unit, and the lower shaping mold is fixedly arranged;
during operation:
the cold transfer unit is set at a temperature of lower than 40°C, and the cold transfer unit is set to transfer the curved dimming film processed by the hot-press forming unit to the cold-shock shaping unit within 2s to 50s;
in the cold-shock shaping unit, the upper shaping mold is set at a temperature of lower than 40°C, the lower shaping mold is set at a temperature of lower than 40°C, and the upper shaping mold and the lower shaping mold are set to perform cold-shock shaping treatment on the curved dimming film from the cold transfer unit for 30s to 600s;
a gauge pressure applied by the second pressing drive device, which drives the upper shaping mold to press on the lower shaping mold, is set to range from 0.05MPa to 1.5MPa;
a gauge pressure of a negative pressure applied by the second vacuum extraction system is set to be lower than -0.02MPa.

35. The manufacturing device for curved dimming film according to claim 34, wherein during operation:
in the cold-shock shaping unit, the upper shaping mold is further set at a temperature of lower than 30°C, the lower shaping mold is further set at a temperature of lower than 30°C, and the upper shaping mold and the lower shaping mold are set to perform cold-shock shaping treatment on the curved dimming film from the cold transfer unit for 50s to 500s.

36. The manufacturing device for curved dimming film according to claim 34, wherein the gauge pressure applied by the second pressing drive device, which drives the upper shaping mold to press on the lower shaping mold, is further set to range from 0.2MPa to 1.2MPa.
